(19) Europäisches Patentamt
European Patent Office
Office européen des brevets

(11) EP 2 337 284 B1

(12) # FASCICULE DE BREVET EUROPEEN

(45) Date de publication et mention de la délivrance du brevet:
**05.12.2012 Bulletin 2012/49**

(51) Int Cl.:
***H04L 12/56*** *(2006.01)*

(21) Numéro de dépôt: **10195890.8**

(22) Date de dépôt: **20.12.2010**

(54) **Protocole de routage fiable**

Sicheres Routingprotokoll

Secure routing protocol

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2009 FR 0906215**

(43) Date de publication de la demande:
**22.06.2011 Bulletin 2011/25**

(73) Titulaire: **Thales**
**92200 Neuilly Sur Seine (FR)**

(72) Inventeurs:
- **Tessier, Olivier**
  **92700, COLOMBES (FR)**
- **Perez, Frédéric**
  **92700, COLOMBES (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A2- 1 189 384**
**WO-A1-2008/055539**
**US-A- 6 069 895**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 337 284 B1

Printed by Jouve, 75001 PARIS (FR)

## Description

L'objet de l'invention concerne un procédé de routage dynamique ou protocole de routage utilisé dans le domaine des réseaux bas débits fonctionnant dans la gamme 30 MHz — 600 MHz.

Le procédé selon l'invention est par exemple utilisé sur des noeuds interconnectant plusieurs réseaux physiques différents, dont certains sont à faible débit et forte latence, comme les réseaux radio VHF (Very High Frequency).

Le protocole selon l'invention ou procédé de routage peut être utilisé dans tout réseau de transmission UHF, VHF ou autre.

Dans le domaine technique des réseaux de communication l'un des problèmes qui se pose est de trouver des mécanismes d'échanges entre routeurs qui soient à la fois réactifs et économes en bande passante utilisée. La difficulté consiste en effet à établir rapidement la topologie des routeurs, aussi bien en phase d'établissement qu'en phase de modification des composants du réseau (disparition, apparition de routeurs, changement de raccordement réseaux des routeurs), tout en n'inondant pas les réseaux d'échanges protocolaires qui peuvent consommer une partie importante de la bande passante disponible.

L'état de l'art connu par le Demandeur à ce sujet concerne notamment des protocoles de routages utilisés sur le protocole Internet (IP en abrégé anglo-saxon) qui sont définis par exemple dans les RFC (Request for Comment) qui sont un ensemble de documents qui font référence auprès de la Communauté Internet et qui décrivent, spécifient, aident à l'implémentation, standardisent et débattent de la majorité des normes, standards, technologies et protocoles liés à Internet et aux réseaux en général. Parmi ces documents, on peut citer les protocoles expérimentaux définis dans le cadre des groupes de travail sur les réseaux mobiles ou Mobile Ad Hoc Networks connus des spécialistes du Domaine, ou encore les protocoles standards utilisés pour des interconnexions de réseaux filaires.

Malgré l'efficacité de ces protocoles, les topologies d'interconnexion des réseaux tactiques actuellement connues dans le domaine militaire présentent notamment comme inconvénient de présenter de la redondance des noeuds entre réseaux et de réseaux entre noeuds, ce qui génère une augmentation des échanges protocolaires.

Dans le cas des réseaux bas débits (de 1 Kbits/s à quelques dizaines de Kbits/s), les protocoles existants et connus de l'Homme du métier, ne sont pas conçus pour optimiser la réduction de la quantité d'information protocolaire échangée, nécessaire pour un fonctionnement correct des réseaux bas débit. Ces protocoles en général saturent donc la bande passante des réseaux radio VHF et dans une moindre mesure celle des réseaux UHF. De même, la non prise en compte des concepts de réseaux parallèles ou redondants entre noeuds entraîne des phénomènes d'avalanche dans certains protocoles, ce qui provoque un trafic important.

Les protocoles évoqués ci-dessus ne permettent donc pas de réaliser une économie de bande passante. D'autre part, le risque d'un fort taux de pertes de paquets potentiels n'est pas pris en compte par les protocoles existants. Ces protocoles ne permettent donc pas d'obtenir une convergence rapide tout en échangeant une faible quantité d'informations.

La demande de brevet WO 2008/055539 divulgue un réseau multi-domaine dans lequel chaque domaine du réseau collecte des informations de routage intra-domaine et génère une vue réduite de cette information disponible aux autres domaines du réseau.

La demande de brevet WO 055539 décrit un procédé dans lequel les utilisateurs d'un domaine collectent des informations de routage intra-domaines et chaque domaine utilise cette information de routage avec une information « réduite » de routage des autres domaines pour former une vue logique du réseau afin de décider de la route à utiliser.

Le brevet US 6 069 895 divulgue une architecture et des mécanismes internes d'un routeur et les relations entre topologie, table de routage et retransmission.

Le brevet EP 1 189 384 divulgue un procédé dans lequel les transmissions sont périodiques.

Pour la description de l'invention les définitions suivantes seront utilisées :

| | |
|---|---|
| Forme d'onde : | Ensemble constitué d'une couche logique et physique permettant d'envoyer des informations à distance, sans fil. Cela inclut le codage des informations sur la voie radio ainsi que les protocoles d'accès au média et éventuellement les protocoles de routage internes. |
| Média filaire : | Ensemble constitué d'une couche logique et physique permettant d'envoyer des informations à distance, avec fil. |
| Média physique : | Terme générique désignant une forme d'onde ou un média filaire. |
| Réseau de transmission : | Couple (média physique, éléments de configuration) permettant à tous les possesseurs d'un couple donné de communiquer potentiellement entre eux. Un tel possesseur est appelé membre du réseau. |

| | |
|---|---|
| Réseau élémentaire : | Ensemble de membres d'un réseau de transmission qui sont connexes à un instant t. |
| FORWARDER : | Fonction ayant pour rôle de relayer des données entre des applications locales et des réseaux élémentaires, et entre des réseaux élémentaires. Le « forwarder » est chargé de trouver le prochain NIR ou l'application locale vers lequel envoyer les données ; la tâche associée est appelée « forwarding », |
| NIR : | Noeud d'Interconnexion Réseau. Désigne toute entité fonctionnelle assurant les fonctions nécessaires à la transmission de données de et vers un ou plusieurs réseaux élémentaires. |
| Accès au réseau de transmission (ART): prochain NIR. | qui est chargé de transmettre sur un média physique les données vers le Couche d'adaptation chargée de compléter les services offerts par le média physique, et/ou de réaliser les adaptions fonctionnelles entres les services requis par le FORWARDER et ceux offerts par le média physique. Un ART permet au noeud NIR d'envoyer/recevoir des données sur/depuis le réseau physique correspondant. |
| Voisinage (d'un NIR N) : | Ensemble des NIR qui sont joignables par N en traversant un et un seul réseau élémentaire. |
| Sig_Neighborhood : | Message de signalisation de FIRE qui contient principalement le Voisinage d'un NIR. |
| Relais de Sig_Neighboorhood (RSN) : | NIR qui doit relayer des Sig_Neighborhood entre certains de ses voisins. |

Le protocole de routage selon l'invention repose notamment sur quatre principes

1) la récupération des topologies média,
2) une diffusion fiabilisée,
3) une gestion de noeuds destinataires et non d'interfaces de sortie,
4) une émission pertinente d'information (non émission d'information connue par les noeuds voisins).

Ces principes seront explicités plus loin dans la description. On utilisera pour désigner un même objet, à savoir le procédé de routage fiabilisé selon l'invention, le mot procédé ou l'expression « protocole FIRE », ou encore « protocole ».

L'invention concerne un procédé de routage fiabilisé au sein d'un système comprenant un ou plusieurs réseaux composés de plusieurs noeuds reliés entre eux par des moyens de communication, ledit système comprenant un accès au réseau de transmission ou ART chargé de transmettre sur un média physique les données vers un prochain noeud d'interconnexion réseau NIR, ledit système utilisant un protocole de routage à états de liens construisant la topologie des noeuds au sein d'un système de noeuds caractérisé en ce que ledit procédé de routage détermine la topologie logique de noeuds d'interconnexion réseau NIR en utilisant en combinaison les modules suivants :

Module 11 NIR_TOPO_01 : Découverte du Voisinage grâce aux fonctions intrinsèques des réseaux physiques
Module 12 : NIR_TOPO_02 figure 5 : Lissage des informations fournies par les ART pour améliorer la stabilité du **protocole**
Module 13: NIR_TOPO_03: principe de distribution des voisinages vers l'ensemble des NIR
Module 14: NIR_TOPO_04: Relayage des informations associées à un noeud (voisins, liens et leurs caractéristiques) Sig_Neighborhoods par un sous-ensemble des noeuds NIR (relais de Sig_Neighborhoods)
Module 15 NIR_TOPO_05 : Fiabilisation bond par bond de la transmission des Sig_Neighborhoods entre les différents noeuds
Module 16 NIR_TOPO_06 : Transmission des Sig_Neighborhoods en point-à-multipoint
Module 17 NIR_TOPO_07: Annonce des caractéristiques orientées des liens logiques uniquement par les routeurs source des liens
Module 18 NIR_TOPO_08 : Marquage des données de signalisation pour gérer le non-séquencement en réception
Module 19 : NIR_TOPO_09 : calcul de la topologie globale

D'autres caractéristiques et avantages du procédé selon l'invention apparaîtront mieux à la lecture de la description qui suit d'un exemple de réalisation donné à titre illustratif et nullement limitatif, annexé des figures qui représentent :

- La figure 1 un exemple de lien entre la fonction de topologie radio fiabilisée ou FIRE selon l'invention et les données de transmission (forwarding),
- La figure 2, un exemple des données utilisées pour calculer la topologie des noeuds d'interconnexion réseau,
- La figure 3, un exemple d'architecture fonctionnelle du procédé selon l'invention,
- La figure 4, la description du mécanisme de découverte du voisinage,
- La figure 5, la représentation du mécanisme de lissage des informations fournies par les ART,
- La figure 6, un exemple de distribution des paramètres associés à un noeud NIR,
- La figure 7, un exemple de topologie avec deux réseaux reliés par un RSN,
- La figure 8, une reconstitution d'un ensemble de paramètres associés à un noeud NIR à partir de paramètres transmis par les noeuds du réseau,
- La figure 9, un exemple de noeud non RSN,
- La figure 10, un exemple de noeud potentiellement RSN,
- La figure 11, un mécanisme de détection des RSN potentiels et auto-élection d'un RSN,
- La figure 12, un exemple de relayage de Sig_Neighborhood,
- La figure 13, un exemple de format d'une table des voisins pour un noeud, et
- La figure 14, un exemple de tables des signalisations de voisinage.

Avant d'expliciter un exemple de mise en oeuvre du procédé de routage dynamique fiabilisé selon l'invention désignée FIRE quelques rappels et hypothèses de travail sont listés :

**Hypothèse préliminaires**

| | |
|---|---|
| **HYP_TOPO_1 :** | Le choix de la meilleure route entre une source 'S' et une destination 'D' pour un paquet de donnée 'P' dépend de plusieurs critères.<br>NB. Ces critères sont appelés par la suite 'critères de routage'. |
| **HYP_TOPO_2 :** | Pour une route entre une source 'S' et une destination 'D' pour un paquet de donnée 'P', la valeur de chaque critère peut dépendre :<br>- de la nature et de l'état des liens traversés (un lien est une liaison logique entre 2 noeuds),<br>- des caractéristiques et de l'état des noeuds relais traversés,<br>- des paramètres caractérisant les paquets de données à acheminer. |

Les routes dépendant de nombreux critères (HYP_TOPO_1), il existe un très grand nombre de routes possibles, chacune étant la 'meilleure' pour un paquet ayant des caractéristiques données. La solution retenue pour le protocole selon l'invention est d'utiliser un protocole de routage à états de liens, qui construit la topologie des noeuds ; la meilleure route pour les paquets de données étant ensuite calculée localement sur chacun des noeuds.

Le procédé selon l'invention ou FIRE va calculer la topologie logique des noeuds NIR au sein d'un système de noeuds NIR. Dans cette topologie logique des noeuds NIR, deux noeuds NIR A et B sont reliés directement entre eux, s'il existe un réseau élémentaire auquel le noeud A et le noeud B appartiennent, indépendamment du nombre de bonds physiques entre A et B au sein du réseau élémentaire.

Cette topologie doit avoir les caractéristiques suivantes (HYP_TOPO_2):

- la topologie doit être représentée sous la forme d'un graphe de noeuds NIR reliés par des liens symétriques (pour la transmission)
- chaque noeud du graphe possède :

    o un identifiant,
    o l'état de silence radio,
    o capacité de transit (peut être dépendant de l'alimentation en énergie, du souhait de privilégier les flux locaux, de règles statiques, ...),
    o une liste des services relayables par le noeud,

- chaque lien du graphe possède :

o un identifiant unique localement,

o des paramètres dépendant de la classe du réseau de transmission (une classe regroupe un ensemble de valeurs des paramètres du réseau, valeurs fixées par configuration)

- ■ une liste des services supportés,
- ■ taille maximale absolue des données supportée,
- ■ taille maximale recommandée des données supportée,
- ■ la liste des niveaux de sécurité autorisés,
- ■ une liste des types de contenu (content_type) autorisés nominalement,
- ■ une liste des types de contenu autorisés en route de secours,

o des paramètres dépendant des informations remontées par l'Accès au Réseau de Transmission (ART)

- ■ débit du lien entre la source et l'extrémité du lien (information dépendant du sens du lien),
- ■ temps d'accès moyen,
- ■ état du lien en termes de transmission : fiable, instable, inconnu.

Ces caractéristiques seront utilisées comme critères de routage.

La figure 1 schématise les liens entre la fonction de topologie radio fiabilisée selon l'invention et les données de Forwarding.

Pour calculer la topologie des NIR, FIRE s'appuie sur 2 types de données comme il est représenté à la figure 2 :

- les données échangées avec les autres entités FIRE,
- les informations reçues des Accès aux Réseaux de Transmission.

**Rappels des principes d'un protocole à états de liens**

Les protocoles dits à « états de liens » permettent d'établir une topologie de routeurs (ou NIR, selon la terminologie employée), chaque routeur faisant tourner une instance du protocole. Le fonctionnement des protocoles de routage inter-réseau à état de liens peut se résumer aux mécanismes principaux suivants :

- **P1 - découverte du Voisinage :** chaque routeur découvre, sur chaque réseau sur lequel il est interconnecté, ses voisins avec qui il a une liaison symétrique (il reçoit des données d'un voisin et ce voisin reçoit ses données). Pour un réseau donné, l'ensemble des voisins accessibles par ce réseau est noté « voisinage réseau ». L'ensemble des voisinages réseaux d'un routeur est appelé Voisinage.
- **P2 - communication du Voisinage :** chaque routeur communique à l'ensemble des autres routeurs ses voisinages. NB. Dans certains cas, seul un sous-ensemble des routeurs communiquent leur voisinage.
- **P3 - calcul de la topologie globale :** chaque routeur, à partir des différents voisinages reçus, construit la topologie globale.

A ces mécanismes principaux se rajoutent des mécanismes secondaires ayant pour objectif de :

- **S1 - fiabiliser la découverte du voisinage,**
- **S2 - fiabiliser les communications des voisinages,**
- **S3 - traiter le non-séquencement en réception** des voisinages reçus (et par exemple ne pas écraser une information récente avec une information obsolète). Permet de gérer les redémarrages (« reboot ») de machines et les retards de transmission dans le système.

La définition et les réglages des mécanismes principaux et secondaires est faite pour optimiser deux critères contradictoires :

- **C1 : la bande passante consommée** par les échanges du protocole de routage,
- **C2 : la réactivité du protocole** (convergence initiale, mise à jour suite à un changement de la topologie des routeurs).

Tout en respectant un 3$^{e}$ critère :

- **C3 : une planification minimale (peu de données de configuration).**

Un des objectifs du protocole est d'avoir une grande réactivité avec une faible bande passante consommée. Ce qu'on peut traduire par un rapport C2/C1 élevé, tout en respectant C3.

**Liste des principaux mécanismes de la fonction de topologie radio fiabilisée (FIRE) mise en oeuvre dans le procédé selon l'invention**

Les paragraphes suivants vont présenter les mécanismes retenus pour la fonction d'établissement de la topologie des NIR. Ils sont identifiés par un préfixe 'FIRE_' suivi d'un numéro à 2 chiffres (ex : FIRE-04). Les exigences sur un mécanisme sont notées FIRE_XX/YYY où YYY est le numéro d'exigence, habituellement incrémenté de 10 en 10, ceci n'étant qu'un exemple non limitatif.

Ces mécanismes sont au nombre de 9 :

11 : Module 11 NIR_TOPO_01 : Découverte du Voisinage grâce aux fonctions intrinsèques des réseaux physiques
Module 12 : NIR_TOPO_02 figure 5 : Lissage des informations fournies par les ART pour améliorer la stabilité du protocole
13 : Module 13 : NIR_TOPO_03 : principe de distribution des voisinages vers l'ensemble des NIR
14 : Module 14 : NIR_TOPO_04 : Relayage des Sig_Neighborhoods par un sous-ensemble des noeuds NIR (relais de Sig_Neighborhoods)
15: Module 15 NIR_TOPO_05 : Fiabilisation bond par bond de la transmission des Sig_Neighborhoods
16: Module 16 NIR_TOPO_06 : Transmission des Sig_Neighborhoods en point-à-multipoint
17 : Module 17 NIR_TOPO_07 : Annonce des caractéristiques orientées des liens logiques uniquement par les routeurs source des liens
18: Module 18 NIR_TOPO_08 : Marquage des données de signalisation pour gérer le non-séquencement en réception
19 : Module 19 : NIR_TOPO_09 : calcul de la topologie globale

Les mécanismes interagissent entre eux selon les mécanismes décrits sur la figure 3, ces mécanismes étant détaillés au fur et à mesure dans la description.

**Découverte du Voisinage figure 4**

**Module 11 NIR_TOPO_01 : Découverte du Voisinage grâce aux fonctions intrinsèques des réseaux physiques**

Le module de transmission ou « FORWARDER » d'un noeud NIR interconnecte des réseaux physiques. Les technologies de ces réseaux physiques étant de nature très différente (débit, délais, pertes, ...), le FORWARDER s'appuie sur les réseaux de transmission pour calculer ses informations de voisinage, ce qu'explicite l'exigence ci-après.

**NIR_TOPO_01/010**

Chaque accès à un Réseau de Transmission ART du noeud NIR doit fournir au protocole selon l'invention, la topologie du réseau élémentaire dont il fait partie. Cette topologie doit contenir la description d'un graphe de noeuds ayant les propriétés suivantes :

- Chaque noeud représente un NIR ou un relais de transmission
- Chaque lien est un lien symétrique, au sens de la possibilité de transmission. Pour un noeud donné, chaque extrémité du lien doit pouvoir transmettre vers l'autre lien.

La fonction de résolution d'adresse NIR en adresse liaison et la fonction réciproque étant assurées par l'ART, la topologie fournie contient des adresses de noeuds NIR et non pas des adresses liaisons (propres au réseau de transmission). Un noeud du graphe du réseau élémentaire n'a pas d'adresse NIR quand ce noeud représente un relais de transmission sans fonction noeud.

NIR_TOPO_01/010 suffit à connaître les NIR voisins (au sens logique) et le nombre de bonds physiques au sein du réseau de transmission entre 2 NIR. Cependant, un complément d'information est souhaitable pour correctement estimer la qualité de la liaison réseau entre 2 NIR.

**NIR_TOPO_01/020**

Lorsque l'ART fournit une topologie de réseau élémentaire à FIRE, il doit fournir, si la technologie du réseau de transmission le permet, les informations complémentaires suivantes :

- Débit de chaque lien, avec orientation du lien en cas de débits non symétriques,
- Temps d'accès moyen au canal physique de chaque lien,
- Qualité de chaque lien : bonne, moyenne, mauvaise, déduite, par exemple des informations fournies par le modem situé dans le Média Physique, donc en-dessous de l'ART.

**Module 12 : NIR_TOPO_02 figure 5 : Lissage des informations fournies par les ART pour améliorer la stabilité du protocole**

Pour économiser la bande passante consommée par la signalisation de topologie entre NIR sur les réseaux de transmission radio, les envois de données de signalisation ne peuvent pas être trop fréquents. De fait, il n'est pas souhaitable (ni même intéressant) d'annoncer aux autres NIR 'en temps réel' les changements des caractéristiques des liens ou de topologie interne fournis par un ART.
Les informations fournies par les ART doivent donc être traitées avant d'être répercutées vers les autres noeuds, afin d'assurer une certaine stabilité des informations envoyées et de la topologie résultante.
Le premier traitement concerne les caractéristiques des liens entre noeuds :

**NIR_TOPO_02/010**

Selon les caractéristiques dynamiques des réseaux de transmission, le protocole selon l'invention FIRE doit lisser certaines variations des caractéristiques des liens avant de les inclure dans le voisinage diffusé aux autres noeuds.
Le deuxième traitement concerne la topologie interne des réseaux :

**NIR_TOPO_02/020**

Pour gérer les réseaux maillés et lisser l'évolution de leur topologie, le protocole selon l'invention va classer les nombres de bonds en 3 catégories (proche, médian, lointain) avec une hystérisis pour entrer et sortir de chaque catégorie en fonction du nombre de bonds réels. Cette catégorisation dépend du type de service à faire transiter par le réseau de transmission.
Enfin, afin que les voisinages puissent être envoyés aux NIR voisins « nominativement », FIRE doit mettre à jour et fournir la topologie à 1 bond au FORWARDER.

**NIR_TOPO_02/030**

Sur réception d'une topologie d'un réseau élémentaire, et une fois l'opération de lissage effectuée (**NIR_TOPO_02/020**), le procédé selon l'invention va sauvegarder la topologie lissée dans une table Local_Topologie_Table, 20 figure 3.
Quand Local_Topologies_Table est modifiée, alors la fonction de construction du graphe recalcule le graphe et met ensuite à jour la topologie des NIR.

**Module 13 :NIR_TOPO_03 figures 6, 7, 8 Principe de distribution des Voisinages vers l'ensemble des NIR**

Pour que chaque NIR puisse construire la topologie complète du réseau, il est nécessaire et suffisant de connaître l'ensemble des voisins de chaque NIR et les caractéristiques des liens entre chaque NIR et ses voisins. Le principe de base est donc que chaque NIR annonce à tous les autres NIR ces données (voisins, liens et leurs caractéristiques), qui sera dénommé Sig_Neighborhood.
Pour optimiser cette diffusion :

- chaque NIR envoie son Sig_Neighborhood vers ses voisins, nominativement (et non par inondation sur les interfaces locales),
- cet envoi est réalisé de manière optimisée, en enlevant les informations connues des récepteurs,
- chaque NIR reconstitue les Sig_Neighborhood complets en réception,
- un sous-graphe de relais est établi et seuls ces relais sont en charge de redistribuer les Sig_Neighborhoods reçus vers les autres NIR,
- la fiabilisation de tous ces envois ne se fait pas par répétition systématique, mais par acquittements et retransmission, effectués par les protocoles des couches inférieures (FORWARDER, ART, ...)
- lors de la distribution d'un Sig_Neighborhood vers des NIR sur un réseau élémentaire, un seul envoi point-à-multipoint est demandé au FORWARDER, à la place de multiples envois point-à-point,

- les caractéristiques dépendantes du sens du lien ne sont annoncées que par le NIR source du lien orienté.

**NIR_TOPO_03a : Envoi optimisé des Sig_Neighborhoods aux voisins NIR_TOPO_03/010**

Sur chaque nouvelle topologie de réseau élémentaire reçue, le protocole selon l'invention FIRE doit construire l'ensemble des éléments suivants, appelés Sig_Neighborhood :

- Les propriétés non planifiées du noeud NIR local, s'il en existe (capacité de transit, services pouvant être relayés, ..)
- La liste des NIR voisins accessibles par tout réseau élémentaire $R_E$, pour chaque NIR voisin, NIR($R_E$)

L'identification du réseau de transmission dont fait partie $R_E$ (i.e par lequel le NIR voisin est accessible, il existe une identification globale de chaque réseau de transmission.

- Les propriétés du NIR voisin non planifiées, s'il en existe,
- Les propriétés non planifiées du lien vers ce voisin, s'il en existe (ex : débit, qualité du lien en terme de transmission)
- Le CRC calculé sur les valeurs précédentes
- Le numéro de séquence de ce Sig_Neighborhood, calculé selon les exigences NIR_TOPO_08/010.

Ensuite si first_new_topology=TRUE alors FIRE doit armer max_waiting_for_new_network_topology_timer (au démarrage de FIRE, first_new_topology doit être initialisé à TRUE). Ce timer correspond au temps d'attente maximum de nouvelles topologies de réseaux élémentaires provenant des ART, une fois la première topologie reçue; il a pour objectif d'éviter la transmission de trop nombreux Sig_Neighborhoods lors des phases d'instabilité.

Puis le protocole FIRE doit réarmer le timer waiting_for_new_network_topology_timer. Ce timer correspond au temps d'attente d'une nouvelle topologie d'un réseau élémentaire; étant systématiquement réarmé, c'est le timer max_waiting_for_new_network_topology_timer qui évite une attente perpétuelle ; et enfin

Le protocole FIRE doit passer first_new_topology à FALSE. Cette variable d'état est utilisée pour ne lancer le timer max_waiting_for_new_network_topology_timer qu'à la réception de la première nouvelle topologie d'une « salve ».

Par exemple, un réseau radio VHF ou UHF est intrinsèquement identifié par les paramètres qui permettent à ses membres de communiquer (clés, fréquence, ...). Le regroupement de ces paramètres en un identifiant unique court (1 à 2 octets) permet de diffuser les propriétés intrinsèques du réseau, en consommant moins de bande passante que si l'on diffusait la liste exhaustive des valeurs de ses paramètres. En revanche, l'appartenance des NIR à un réseau est diffusée et non connue par planification. Elle n'est pas utilisée pour en déduire des informations de connectivité mais pour des informations de caractérisations des liens (utilisées pour le routage multi-critères). De fait, la scission des réseaux de transmission en plusieurs réseaux élémentaires n'a pas d'impact sur le fonctionnement du protocole de routage.

L'objectif des timers présents dans NIR_TOPO_010 est d'éviter de transmettre des informations immédiatement après indication d'une nouvelle topologie d'un réseau de transmission. C'est particulièrement utile lors des phases de démarrage, d'arrivée dans un nouveau réseau, etc. lorsque les topologies des réseaux de transmission changent rapidement. Après réception d'un changement de topologie suivant un état stable, au maximum à la fin du timer global max_waiting_for_new_network_topology_timer, le Sig_Neighborhood est envoyé.

Le CRC contenu dans un Sig_Neighborhood permet aux voisins recevant celui-ci de vérifier que la reconstruction du Sig_Neighborhood est conforme au Sig_Neighborhood initial.

**NIR_TOPO_03/020:**

Sur expiration de max_waiting_for_new_network_topology_timer ou de waiting_for_new_network_topology_timer, le protocole FIRE doit fournir Sig_Neighborhood à la fonction de construction des Sig_Neighborhood_Transmitted définie par NIR_TOPO_03/030, et positionner first_new_topology à TRUE.

L'exigence NIR_TOPO_03/010 construit tout le voisinage d'un noeud N, indépendamment du voisin destinataire. Or, pour un voisin Ni donné, ce voisinage contient des informations que Ni connait déjà, comme les liens N<->Ni. Pour éviter de transmettre de l'information non pertinente sur les réseaux, FIRE calcule pour chaque voisin Ni un Sig_Neighborhood allégé, noté Sig_Neighborhood_Transmitted[Ni].

**NIR_TOPO_03/030, figure 6:**

Quand le protocole FIRE envoie un Sig_Neighborhood local **(module 13a figure 3)** vers des voisins Ni, il doit déterminer quelles sont les informations de ce Sig_Neighborhood déjà connues par chaque voisin Ni (ex : connectivité via radio, mesure des débits). Il doit ensuite les retrancher de Sig_Neighborhood pour former un Sig_Neighborhood allégé noté Sig_Neighborhood_Transmitted[Ni].

FIRE doit ensuite envoyer les Sig_Neighborhood_Transmitted[Ni] selon l'exigence NIR_TOPO_06/010 décrite ci-après.

Ces traitements permettent de diminuer la taille de Sig_Neighborhood transmis vers chaque voisin. Comme le numéro de séquence n'est connu que du noeud local, il faut nécessairement l'envoyer. Au minimum, un Sig_ Neighborhood_Transmitted[Ni] est réduit au numéro de séquence. Il faut noter que Sig_Neighborhood_Transmitted est généralement différent selon le voisin vers lequel Sig_Neighborhood devait être envoyé.

Par exemple, pour un ensemble de noeuds connectés uniquement à un seul réseau élémentaire $R_E$, chaque noeud n'ayant pas de caractéristiques dynamiques : Sig_Neighborhood se résume au numéro de séquence et aux informations remontées par l'ART de $R_E$, et Sig_Neighborhood_Transmitted comprend uniquement le numéro de séquence (uniquement connu de l'émetteur) et la valeur du CRC (calculé sur les informations initiales, et qui permet au récepteur de s'assurer que la reconstitution qu'il fait est conforme à l'origine).

Cette optimisation permet de diminuer drastiquement la quantité de trafic protocolaire dans le cas des liens redondants entre NIR, qui peuvent être créés soit par réseaux redondants entre noeuds, soit par des noeuds redondants entre réseaux.

**Option permettant de ne pas envoyer certains Sig_Neighborhood_Transmitted, figure 7**

Tant que le Sig_Neighborhood_Transmitted se résume au couple (numéro de séquence, CRC), on n'est pas obligé de l'envoyer (i.e. si aucun Sig_Neighborhood_Transmitted n'a jamais été envoyé précédemment). Il est évident que le voisin ne recevant aucun Sig_Neighborhood, il ne pourra rien relayer même s'il est RSN pour nous.

La topologie reconstituée est incomplète, puisqu'il manque les liens contenus dans les Sig_Neighborhood_ Transmitted qui n'ont jamais été transmis. Cependant ces liens 'non transmis' n'ont qu'un intérêt local. Les noeuds distants, qui auront une topologie incomplète, n'ont pas besoin de ces liens pour calculer la meilleure route quels que soient les critères retenus.

Par exemple, supposons qu'un réseau élémentaire $R_E1$ comprenne 4 noeuds (1, 2, 3 et 4), tous en portée les uns des autres. Ce réseau élémentaire est connecté à d'autres réseaux via le noeud 4 et uniquement par lui. Les noeuds 1, 2 et 3 ne transmettent alors aucun Sig_Neighborhood_Transmitted. Le noeud 4 transmet aux autres noeuds (5 et plus) ses liens avec 1, 2 et 3 : (1,4), (2,4), (3,4). Les noeuds 5+ n'auront donc jamais connaissance de l'existence des liens (1,2), (1,3), (2,3). Cependant, pour joindre 1, 2 ou 3, un noeud 5+ passera par 4 et n'aura donc jamais besoin de ces liens.

Dans l'exemple donné, ce sont uniquement les liens logiques qui sont considérés, la topologie physique du réseau $R_E1$ n'est pas considérée : ainsi, il est tout à fait possible que le chemin physique entre 4 et 1 passe par 2. Physiquement, la topologie correspond à (4->2->1), mais logiquement, du point de vue « inter réseau élémentaire », la topologie est (4->1).

**NIR_TOPO_03b : Reconstitution des Sig_Neighborhood en réception NIR_TOPO_03/040 :**

Quand le protocole FIRE reçoit un Sig_Neighborhood (N), et que N n'est pas un voisin du noeud local, il doit stocker le Sig_Neighborhood reçu dans la table Distant_Neighborhood_Table.

**NIR_TOPO_03/050 figure 8:**

Quand FIRE reçoit un Sig_Neighborhood (N), et que N est un voisin du noeud local (=> Sig_Neighborhood reçu est en fait un Sig_Neighborhood_Transmitted) :

FIRE doit reconstituer le Sig_Neighborhood(N) à partir du Sig_Neighborhood_Transmitted reçu et des topologies des réseaux élémentaires.

Ensuite, FIRE doit calculer la valeur du CRC sur le Sig_Neighborhood reconstitué.

Si ce CRC est différent du CRC contenu dans le Sig_Neighborhood_Transmitted, (*)

o Alors, le protocole fiabilisé FIRE doit stocker le Sig_Neighborhood_Transmitted(N) dans la table Neighborhood_ Rebuilding_Table 22, figure 3 (en remplaçant le Sig_Neighborhood_Transmitted(N) déjà présent dans la table si nécessaire),

o Sinon, FIRE doit stocker le Sig_Neighborhood(N) reconstitué dans la table Distant_Neighborhood_Table et s'il existe un Sig_Neighborhood_Transmitted(N) dans la table Neighborhood_Rebuilding_Table, 21 figure 3, l'effacer.

La reconstruction des Sig_Neighborhood dès la réception des Sig_Neighborhood_Transmitted permet au coeur de FIRE de ne manipuler que des Sig_Neighborhoods complets.
(*) Quand le CRC d'un Sig_Neighborhood(A) reconstruit par un noeud B ne correspond pas au Sig_Neighborhood(A) initial, il s'agit d'une incohérence entre les topologies réseaux fournies par les ART au noeud A et celles fournies au noeud B. Pour un réseau donné, deux cas peuvent conduire à cette incohérence :

- B a une version de la topologie plus juste que celle de A (la topologie réelle n'a pas encore convergé au niveau de A). Le Sig_Neighborhood(A) reconstitué par B est différent (car plus proche de la réalité) que le Sig_Neighborhood (A) initial. Dans ce cas, quand l'ART fournira à A la topologie réelle complète, alors A réémettra un nouveau Sig_ Neighborhood, avec un nouveau CRC. Cette fois-ci, le CRC reçu par B sera cohérent avec le CRC reconstitué. Le problème est réglé grâce aux mises à jour du Sig_Neighborhood émises par A.
- B a une version de la topologie moins juste que celle de A (la topologie réelle n'a pas encore convergé au niveau de B). Le Sig_Neighborhood(A) reconstitué par B est différent (car plus éloigné de la réalité) que le Sig_Neighborhood (A) initial. Si la topologie du réseau n'évolue pas, A ne retransmettra pas d'autre Sig_Neighborhood. Il faut donc gérer le problème au niveau de B. A chaque mise à jour de la topologie fournie par l'ART, B reconstitue un nouveau Sig_Neighborhood et recalcule le CRC correspondant. Quand le CRC calculé correspond au CRC reçu initialement, alors B a retrouvé le Sig_Neighborhood(A) initial. Il le sauve alors dans Distant_Neighborhood_Table et supprime le Sig_Neighborhood_Transmitted stocké dans Neighborhood_Rebuilding_Table.

**NIR_TOPO_03/060** :

A chaque réception d'une nouvelle topologie de réseau élémentaire en provenance d'une ART, FIRE doit, pour chaque Sig_Neighborhood_Transmitted présent dans la table Neighborhood_Rebuilding_Table :

reconstruire le Sig_Neighborhood en prenant en compte les données de la nouvelle topologie de réseau élémentaire,
calculer le CRC sur le Sig_Neighborhood reconstitué,
si ce CRC est égal au CRC contenu dans le Sig_Neighborhood_Transmitted,

o Alors, FIRE doit stocker le Sig_Neighborhood(N) reconstitué dans la table Distant_Neighborhood_Table et l'effacer de la table Neighborhood_Rebuilding_Table,
o Sinon, ne rien faire.

**Module 14 NIR_TOPO_04 figures 9, 10: Relayage des Sig_Neighborhoods par un sous-ensemble des noeuds NIR (Relais de Sig_Neighborhoods)**

**Election des Relais de Sig_Neighborhood - Principes.**

Les Sig_Neighborhood émis par chaque noeud doivent être acheminés vers tous les NIR, afin que chaque NIR puisse calculer la topologie du réseau. Ils doivent être donc relayés. Pour limiter le nombre de relayages superflus (i.e. 2 stations relayent le même voisinage vers les mêmes destinataires), seul un sous-ensemble de NIR relaye les Sig_Neighborhood. Ces NIR sont appelés Relais de Sig_Neighborhood (en abrégé : RSN, Relay of Sig_Neighborhood)).
L'élection des RSN se fait par auto-désignation, ce qui a l'avantage de ne pas nécessiter d'échanges supplémentaires sur les réseaux.
L'objectif de mécanisme d'élection des RSN est de calculer un graphe de distribution (GD) :

- permettant de couvrir le graphe d'origine (GO), GO étant le graphe des NIR,
- le graphe GD ayant un nombre de noeuds inférieur à GO.

Un tel graphe de distribution GD est un sous-graphe de GO tel que, quelle que soit une source appartenant au graphe d'origine GO, une information émise par cette source peut être distribuée vers tous les autres noeuds de GO en étant relayée uniquement par des noeuds de GD.

**Remarques sur l'optimisation du graphe de distribution :**

- L'établissement d'un tel graphe de distribution est similaire au problème dit de « l'arbre couvrant de poids minimal », qui est un problème np-complet (i.e. il n'existe pas d'algorithme dont le temps de calcul est un polynôme du nombre de noeuds & liens.). Donc même sur une topologie connue, le graphe GD ayant un nombre de noeuds minimal n'est pas calculable en pratique (en temps limité sur un routeur). Tout mécanisme on-line de calcul d'un graphe de distribution aboutit donc à un graphe sous-optimal.

- L'objectif du graphe de distribution étant de distribuer les voisinages pour établir le graphe des NIR, le graphe de distribution ne peut évidemment pas être construit à partir du graphe complet. Il est construit avec les seules informations connues par les noeuds avant l'élection des RSN, à savoir les Sig_Neighborhoods des noeuds voisins. Cette connaissance limitée ne permet pas d'aller extrêmement loin vers la solution optimale.
- Même si le critère du nombre de relais minimal semble être celui à optimiser, d'autres critères sont également intéressants dans le cas du protocole selon l'invention : diffuser au plus vite l'information pour accélérer la convergence du calcul de topologie, éviter les graphes de diffusion sans route alternative entre deux noeuds éloignés, etc.

Compte tenu des remarques précédentes et de la difficulté à concevoir un mécanisme de construction de graphe de distribution qui vise une optimalité incertaine, l'approche retenue a été de simplifier sa conception. Le mécanisme retenu pour l'élection des RSN a donc été élaboré en fonction des hypothèses suivantes :

HYPO_RSN_01 : Tous les liens sont considérés comme équivalents pour la construction du graphe de distribution.
HYPO_RSN_02 : Le mécanisme se fonde sur une auto-élection à partir des voisinages reçus (pas de signalisation supplémentaire pour l'élection des RSN).
HYPO_RSN_03 : Dès qu'un RSN est établi, il reste RSN tant que la topologie locale ne varie pas.

Au fur et à mesure que la topologie complète est découverte, il pourrait être tentant de raffiner le graphe des RSN. Cependant, cela nécessiterait d'une part des échanges complémentaires entre NIR sur les réseaux, et d'autre part les Sig_Neighborhoods n'étant relayés qu'une seule fois et en mode fiabilisé, le changement de statut de RSN en non-RSN pourrait aboutir à des incohérences de distribution.

Pour construire le graphe des RSN, on part de la propriété intrinsèque d'un Relais de Sig_Neighborhood : Un Relais de Sig_Neighborhood permet de faire une mise en relation entre deux noeuds qui ne se voient pas directement entre eux.

Donc, pour qu'un noeud puisse être RSN, il doit savoir que deux de ses voisins ne se voient pas. La réception des Sig_Neighborhoods de ses voisins suffit à établir cette connaissance, comme le montrent les exemples ci-dessous en relation aux figures 9 et 10

**NIR_TOPO_04/010 figures 9, 10 :**

Un noeud N est RSN potentiel pour un couple de noeuds (A, B), n °(A) < n °(B), si et seulement si toutes les conditions suivantes sont remplies
A et B sont voisins de N,
A et B ne font pas partie d'un même réseau élémentaire,
N a un Sig_Neighborhood(A) et un Sig_Neighborhood(B) dans sa table des Sig_Neighborhoods,
B est absent de Sig_Neighborhood(A).

Pour un couple donné, c'est toujours le voisinage du plus petit numéro de noeud qui est analysé. En cas de voisinages cohérents, si A est voisin de B, B est alors voisin de A (les liens logiques contenus dans les voisinages sont symétriques). En cas de voisinages incohérents, comme on n'analyse qu'un seul voisinage, il n'y pas de cas d'incohérence à traiter dans l'algorithme.

Tous les noeuds potentiellement RSN ne s'élisent pas RSN systématiquement : si deux noeuds potentiellement RSN sont équivalents (i.e. relayent entre les mêmes voisins, comme les noeuds 2 et 4 dans le schéma ci-dessus), il suffit de n'en garder qu'un pour construire le graphe de distribution.

Par définition, un noeud $N_2$ potentiellement RSN équivalent à un autre noeud $N_1$, pour un couple de voisins donné (VA, VB), est à la fois voisin de VA et voisin de VB. Il est donc présent dans les Sig_Neighborhood de VA et VB, reçus par $N_1$. Les noeuds communs entre VA et VB (avec A et B non voisins entre eux) sont donc les RSN potentiels pour A et B. Par analyse des voisinages, chaque noeud RSN potentiel peut donc trouver les autres noeuds RSN potentiels.

**NIR_TOPO_04/020, figure 11 :**

Soit un couple de voisins (A, B).

Soit nc(i) le nombre de couples de voisins relayés par chaque noeud i RSN potentiel de (A, B), les couples pris en compte devant être détectables par tous les autres noeuds RSN potentiels de (A, B).

Soit max_nc le maximum des nc(i), calculé sur l'ensemble des RSN potentiel de (A, B).

FIRE doit s'élire RSN pour un couple de voisins (A, B) si et seulement si :

il est RSN potentiel pour le couple (A, B),
et s'il respecte une des trois conditions suivantes :

- ○ 1 °/ Il est le seul noeud RSN potentiel pour le couple (A, B),
- ○ 2°/ Il est le seul noeud i dont nc(i) = max_nc
- ○ 3°/ Parmi tous les noeuds i dont nc(i) = max_nc, il possède le plus petit identifiant de noeud.

FIRE doit sauvegarder la liste des couples (A, B) dont il est RSN dans la table RSN_Status_Table, 23 figure 3.

**Cas de non-réception de Sig_Neighborhoods des voisins**

Les Sig_Neighborhoods des voisins peuvent ne pas être reçus :

- suite à l'optimisation des Sig_Neighborhood_Transmitted, dans certains cas, aucun Sig_Neighborhood n'est émis par un voisin,
- en cas de pertes de messages.

Dans ce cas, selon l'algorithme d'élection des RSN précédemment décrit, un NIR qui ne reçoit pas un Sig_ Neighborhood d'un voisin, peut ne pas s'élire RSN potentiel et encore moins RSN. Pour pallier ce manque, un NIR peut également s'auto-élire RSN, selon le mécanisme ci-dessous, décrit dans NIR_TOPO_04/030.

**NIR_TOPO_04/030 :**

Sur modification de Local_Topologies_Table, en cas d'apparition de nouveaux noeuds voisins (i.e. des noeuds qui n'existaient pas dans la Local_Topologies_Table précédente), FIRE doit effectuer les traitements décrits dans le reste de l'exigence.
FIRE doit déclencher le timer RSN_waiting_neighborhood_timer.
Si RSN_first_topology = TRUE, alors le FIRE doit déclencher le timer MAX_RSN_waiting_neighborhood_timer et ensuite passer RSN_first_topology à FALSE.
Si FIRE reçoit au moins un Sig_Neighborhood de chaque nouveau voisin avant expiration d'un des 2 timers, alors il calcule son statut de RSN selon les exigences **NIR_TOPO_04/010 et NIR_TOPO_04/020.**
Sinon (expiration d'un des deux timers) :

○ pour tous les couples (A, B) dont il a les Sig_Neighborhood, FIRE doit calculer son statut de RSN selon les exigences **NIR_TOPO_04/010** et **NIR_TOPO_04/020.**
○ pour tous les couples (A, B) dont il n'a qu'un seul des deux Sig_Neighborhood (ex : celui de A), FIRE doit s'élire RSN pour (A, B) si :

- B ne figure pas dans Sig_Neighborhood(A),
- et A et B ne font pas partie d'un même réseau élémentaire (i.e. ne sont pas ensemble dans une topologie remontée par un ART).

○ pour tous les couples (A, B) dont il n'a aucun des Sig_Neighborhood, FIRE doit s'élire RSN pour (A, B) si :

- A et B ne font pas partie d'un même réseau élémentaire

○ Dans tous les cas, FIRE doit passer RSN_first_topology à TRUE.

FIRE doit sauvegarder la liste des couples (A, B) dont il est RSN dans la table RSN_Status_Table.

**NIR_TOPO_04/040:**

Sur modification de Local_Topologies_Table non traitée par **NIR_TOPO_04/030,** en cas de disparition de noeuds voisins, alors FIRE doit calculer son statut de RSN selon les exigences **NIR_TOPO_04/010** et **NIR_TOPO_ 04/020.**

**NIR_TOPO_04/045 :**

Sur modification de Distant_Neighborhood_Table concernant au moins un Sig_Neighborhood d'un voisin, alors FIRE doit calculer son statut de RSN selon les exigences **NIR_TOPO_04/010** et **NIR_TOPO_04/020.**

**Algorithme d'élection des Relais de Sig_Neighborhood**

**Définitions**

Soit a le noeud local, i.e. celui sur lequel l'algorithme est exécuté. Soit Va l'ensemble des noeuds voisins de a. Va est le voisinage local, calculé à partir des informations fournies par les ART.

Soit Wa,i l'ensemble des voisins d'un noeud i $\in$ Va. Wa,i est l'ensemble des noeuds contenu dans le Sig_ Neighborhood de i. Si aucun Sig_Neighborhood n'est reçu, Wa,i = {a}.

Soit L l'ensemble des noeuds de la topologie locale qui est constituée du noeud local, des noeuds voisins et des noeuds voisins à deux bonds. L = Va $\cup$ Wa,i / i $\in$ Va

**Etape 1**

La première étape consiste à construire, pour chaque noeud n $\in$ L, l'ensemble connu des noeuds voisins de n, Vn.

Si n$\in$ Va, Vn = Wa,n par définition.

Si n $\notin$ Va, Vn = {noeuds i, tels que n $\in$ Wa,i}

**Etape 2**

La deuxième étape consiste à établir, pour chaque noeud n, l'ensemble des couples (i, j) tels que i et j sont voisins de n, mais ne sont pas voisins entre eux. Cet ensemble est noté Cn.

Soit n $\in$ L. On a alors Cn = {(i, j) avec i et j appartenant à Vn, tels que i $\neq$ j, i $\notin$ Vj, et j $\notin$ Vi}

En notant C, l'union des Cn, pour tous les noeuds de L : $\mathbf{C} = \bigcup_{n \in L} \mathbf{Cn}$. C contient l'ensemble des couples de noeuds de la topologie locale L qui sont voisins à 2 bonds sans être voisins entre eux.

Par construction, Cn est l'ensemble des couples pour lequel n est RSN potentiel.

**Etape 3**

La troisième étape consiste à déterminer, pour chaque couple c de noeuds distants de 2 bonds et non voisins entre eux, l'ensemble des RSN potentiels du couple c, noté Rc.

Par définition, les couples à considérer sont les éléments de C.

Soit c $\in$ C. Par définition des Cn et de Rc, nous avons : Rc = {noeuds n, tq c $\in$ Cn}.

Notons R, l'union des Rc, pour tous les couples c de C : $\mathbf{R} = \bigcup_{c \in C} \mathbf{Rc}$.

**Etape 4**

La quatrième et dernière étape consiste à déterminer l'ensemble des couples pour lesquels le noeud local (noeud a) est relais.

Affectation d'un poids à chaque RSN potentiel

Pour chaque noeud n $\in$ L :

- Associer un poids à n, poids égal au nombre de couples pour lesquels n est relais potentiel.
  p(n) : L $\rightarrow$ **N**

n → Nombre de Ri ∈ R, tels que n ∈ Ri

La fonction de poids présentée ci-dessus n'est qu'un exemple. L'algorithme peut être adapté à l'aide d'autres fonctions de poids, tant qu'elles répondent au critère suivant :

- la fonction de poids doit permettre de trier les noeuds de la même manière, quel que soit le noeud de la topologie locale sur lequel le calcul est effectué.

Un exemple d'une telle fonction de poids : p(n) = n.

**Calcul des couples pour lesquels le noeud local est relais**

L'ensemble des couples pour lesquels le noeud local 'a' est RSN est constitué des couples 'c' tels que 'a' est relais potentiel de 'c' (a ∈ Rc) et que le poids de 'a' est le plus élevé par rapport aux poids des autres noeuds relais potentiels du couple 'c'. En cas d'égalité de poids avec d'autres relais potentiels, 'a' est RSN de 'c' si et seulement si 'a' possède le plus petit numéro de noeud parmi l'ensemble des relais potentiels de 'c' de poids maximum.

Soit C_RSN(a), l'ensemble des couples pour lesquels 'a' est RSN. C_RSN(a) est calculé de la manière suivante :

- Pour chaque couple c de C pour lequel a ∈ Rc:

  o Soit Rc_PM l'ensemble des noeuds de Rc dont le poids est maximal. Rc_PM = {i ∈ Rc, tel que p(i) ≥ p(j), quel que soit j ∈ Rc}
  o Soit $n_m$ le noeud de plus petit numéro qui appartienne à Rc_PM (il en existe un et un seul).
  o Le noeud 'a' est RSN de 'c' si est seulement si $n_m$ = a. Ce qu'on peut traduire en : $c \in C_{RSN(a)} ssi\ n_m = a$

On obtient ainsi l'ensemble des couples pour lesquels le noeud local est relais.

**Relayage des Sig_Neighborhoods figure 12**

Les RSN relayent les Sig_Neighborhoods de proche en proche jusqu'à ce que tous les noeuds du système aient la même base de données de voisinage. La fiabilisation de cet acheminement est faite par les RSN (cf. NIR_ TOPO_05, module 15), et non pas par des répétitions effectuées par le noeud origine du Sig_Neighborhood. Ce qui signifie qu'une fois qu'un NIR a généré son Sig_Neighborhood et l'a transmis avec succès à ses voisins, il ne le retransmet plus. Sa prochaine transmission aura lieu quand le contenu du Sig_Neighborhood aura changé.

Ce principe a deux conséquences majeures :

- Quand la topologie est stable et que tous les noeuds ont reçu les voisinages à jour des autres noeuds, plus aucun noeud n'émet de Sig_Neighborhood : le trafic de signalisation de FIRE devient nul.
- La mise à jour de la table des Sig_Neighborhoods d'un noeud A est faite par les RSN « de A », qui sont voisins de A, et non par les noeuds originaires des Sig_Neighborhoods. Cette mise à jour au plus proche permet de gagner en réactivité et en bande passante.

Un Relais de Sig_Neighborhood a donc en charge :

- de relayer les voisinages quand il les reçoit, en fonction des couples de voisins pour lesquels il est relais,
- de les stocker pour assurer la synchronisation des tables de Sig_Neighborhoods de ces mêmes voisins, quand cela est nécessaire.

**NIR_TOPO_04/050**

**Relayage des Voisinages**

Un NIR A, RSN pour des couples (Xi, Yi) relaye tout Sig_Neighborhood reçus de Xi vers le noeud Yi (*et réciproquement de Yi vers Xi),* sauf si :

○ A a déjà reçu ce Sig_Neighborhood (même couple [source, numéro de séquence]) ou une version plus récente, en provenance de Yi (resp. Xi),
○ Yi (resp. Xi) figure déjà dans la table des Sig_Neighborhoods de A, comme destinataire de ce Sig_Neighborhood (même couple [source, numéro de séquence]) ou d'une version plus récente,
○ Yi (resp. Xi) est le noeud origine du Sig_Neighborhood,
○ Yi (resp. Xi) est un voisin du noeud origine du Sig_Neighborhood.

Les conditions ci-dessus permettent d'éviter des envois inutiles. Elles nécessitent aux RSN de stocker les Sig_Neighborhood reçus et le (s) numéro de NIR voisins qui leur ont envoyés ce Sig_Neighborhood.

**NIR_TOPO_04/060**

**Passage d'un noeud A en mode Relais de Sig_Neighborhood pour un couple de voisins (X, Y)**

Lorsqu'un NIR A (re-)devient RSN pour un couple (X,Y), il doit relayer vers Y tous les Sig_Neighborhood stockés qu'il a reçus de X *(et réciproquement),* sauf si :

o A a déjà reçu ce Sig_Neighborhood (même couple [source, numéro de séquence]) en provenance de Y (resp. X),
○ Y (resp. X) figure déjà dans la table des Sig_Neighborhood de A, comme destinataire de ce Sig_Neighborhood (même couple [source, numéro de séquence]),
○ Y (resp. X) est le noeud origine du Sig_Neighborhood,
○ Y (resp. X) est un voisin du noeud origine du Sig_Neighborhood.

La réception de numéros de séquence plus anciens que le numéro de séquence stocké est traitée dans le paragraphe NIR_TOPO_08.

**Stockage des Sig_Neighborhoods**

Il faut noter que dans l'exigence NIR_TOPO_04/060, il n'est pas précisé si A était déjà RSN pour un autre couple. Les deux cas ('A était déjà RSN', 'A était non-RSN') sont possibles. Si A était non-RSN, il doit quand même pouvoir respecter cette exigence, et donc avoir stocké tous les Sig_Neighborhood reçus, et avoir noté quel voisin lui a émis ou relayé chaque Sig_Neighborhood.

**NIR_TOPO_04/070**

**Stockage des Sig_Neighborhood**

Pour chaque Sig_Neighborhood reçu, FIRE doit vérifier s'il existe un Sig_Neighborhood de même noeud origine et de numéro de séquence identique ou plus récent.
Si oui, alors FIRE doit supprimer le Sig_Neighborhood reçu.
Sinon FIRE doit stocker, dans une table appelée Distant_Neighborhood_Table :

○numéro du NIR-origine du Sig_Neighborhood (i.e. qui a généré initialement le Sig_Neighborhood),
○ numéro de séquence du Sig_Neighborhood,
○ la liste des NIR voisins qui ont envoyés au noeud local un Sig_Neighborhood (NIR_origine). Cette liste est notée LPHR (List Of Previous Hops NIRs),
○ le contenu du Sig_Neighborhood reçu. Le contenu du Sig_Neighborhood est constitué des liens du noeud origine avec ses voisins, chaque lien étant un couple :

* numéro de noeud voisin,
* réseau de transmission à traverser pour joindre le noeud voisin.

Un même noeud peut apparaître plusieurs fois dans le contenu du Sig_Neighborhood si le noeud origine peut le joindre par plusieurs réseaux de transmission.
Le numéro de séquence du Sig_Neighborhood stocké est le numéro de séquence le plus récent présent dans la liste LPHR.

**NIR_TOPO_04/080**

**Stockage des informations des Sig_Neighborhoods relayés avec succès**

Chaque NIR doit stocker, dans la table Distant_Neighborhood_Table, dont un exemple de format est donné à la figure 13, pour chaque Sig_Neighborhood reçu :

la liste des NIR voisins à qui le noeud local a relayé un Sig_Neighborhood(NIR_origine) et qui ont acquitté positivement. Cette liste est notée LANH (List of Acknowledged Next Hops).

**NIR_TOPO_04/090**

**Conservation du Sig_Neighborhood d'un noeud disparaissant du voisinage ou de la topologie**

Suite à un re-calcul du voisinage local ou de la topologie, FIRE doit conserver dans la table des Sig_Neighborhood distants dont un exemple est donné à la figure 14 (Distant_Neighborhood_Table) tous les Sig_Neighborhood des noeuds ayant disparu.

Cette conservation permet de limiter les échanges de Sig_Neighborhood en cas de reconnexion de 2 parties du système.

Il n'y jamais suppression d'un noeud origine, puisqu'il n'y pas de mécanisme de vieillissement dans le fonctionnement normal du protocole.

**Silence radio**

L'impact du Silence Radio est le suivant :

- Prise en compte des stations en Silence Radio dans le calcul de la topologie, en considérant que toutes les stations en Silence Radio ont des liens orientés dans le sens entrant uniquement, et donc aucun lien sortant.
- Les voisins n'envoient plus de Sig_Neighborhood à la station en Silence Radio sur les liens SR.
- Une station en SR ne peut pas être RSN potentiel

**Module 15 NIR_TOPO_05: Fiabilisation bond par bond de la transmission des Sig_Neighborhoods**

**NIR_TOPO_05/010**

**Fiabilisation bond par bond**

Lorsque FIRE transmet un Sig_Neighborhood vers des NIR voisins, il doit demander aux couches sous-jacentes utilisées d'envoyer le Sig_Neighborhood en mode fiabilisé.

La fonction de fiabilisation bond par bond est préférentiellement située dans les ART, car elle dépend des propriétés intrinsèques du média (utilisation de TCP sur un réseau IP unicast, PMUL sur un réseau VHF, ...).

**Module 16 NIR_TOPO_06 : Transmission des Sig_Neighborhoods en point-à-multipoint**

**NIR_TOPO_06/010**

**Envoi en point à multipoint**

Lorsque FIRE transmet un Sig_Neighborhood vers des NIR voisins, il doit si possible demander aux couches sous-jacentes utilisées d'envoyer le Sig_Neighborhood en mode point-à-multipoints.

Le Forwarder duplique alors le Sig_Neighborhood s'il doit être émis sur différents réseaux élémentaires. Ensuite, chaque ART décide de procéder à un ou plusieurs envois, avec une fiabilisation adaptée (cf.NIR_TOPO_05), selon le type et la nature du réseau sous-jacent (point-à-point ou diffusant, fiable ou avec pertes importantes, ...).

**Module 17 NIR_TOPO_07 : Annonce des caractéristiques orientées des liens logiques uniquement par les routeurs source des liens**

Il existe des caractéristiques de liens qui dépendent du sens du lien. Le débit d'une liaison radio entre A et B peut être différent de la liaison entre B et A. Au niveau du noeud A, la topologie remontée par un ART peut contenir à la fois le débit de A vers B et de B vers A.
Si A et B annoncent chacun dans leur Sig_Neighborhood les 2 débits :

- d'une part la même information est envoyée 2 fois à travers le système,
- d'autre part, des incohérences au sein de la topologie des ART devraient alors être traitées par FIRE.

**NIR_TOPO_07/010**

**Annonce des caractéristiques orientées des liens logiques**

Lorsqu'un FIRE transmet le Sig_Neighborhood du NIR local vers des NIR voisins, il doit enlever toute information qui dépend de l'orientation des liens et qui concerne les liens orientés dont il est destination (i.e. dont il n'est pas la source).

**Module 18 NIR_TOPO_08: Marquage des données de signalisation pour gérer le non-séquencement en réception**

Les Sig_Neighborhood sont estampillés avec un numéro de séquence, choisi par la source de ce Sig_Neighborhood.

**NIR_TOPO_08/010**

**Numéro de séquence des Sig_Neighborhoods**

Lorsque FIRE transmet le Sig_Neighborhood du NIR local vers des NIR voisins, il doit y inclure un numéro de séquence permettant de détecter les reboot des noeuds et les déséquencements introduits par la transmission réseau.
Lorsque les machines sur lesquelles est implanté FIRE sont synchronisées (à quelques secondes près), FIRE doit utiliser une date comme valeur de numéro de séquence.

**Module 19 NIR_TOPO_09 Calcul de la topologie globale**

**Principes de construction de la topologie globale.**

A partir de tous les Sig_Neighborhoods reçus, chaque NIR construit le graphe de la topologie en partant de lui-même, puis de ses voisins, etc..., en ne prenant en compte que les informations fournies par le noeud analysé : quand on analyse le Sig_Neighborhood d'un noeud A, on trace des liens orientés partant de A vers tous les NIR déclarés dans ce Sig_Neighborhood comme voisins de A. Nous appellerons ce principe de construction de graphe la « construction orientée ».
Le principe de construction orientée permet de gérer l'absence de notion de vieillissement des Sig_Neighborhoods. Classiquement, pour gérer la disparition d'un noeud (panne, destruction ou simplement non-accessibilité temporaire), les protocoles à états de liens considèrent que la non-réception d'un voisinage de ce noeud pendant un certain temps signifie qu'il faut supprimer les informations de voisinage de ce lien. Cela se fonde sur le fait qu'ils répètent régulièrement les voisinages. Comme FIRE, pour économiser de la bande et rendre la fiabilisation des échanges plus adaptées aux réseaux, ne répète pas les voisinages mais fiabilise bond par bond, ce mécanisme de vieillissement ne peut fonctionner.
Le principe sous-jacent à la construction orientée est le suivant : quand un noeud A disparaît, ses voisins s'en rendent compte. Les voisins les « plus proches » de nous (ex : B) vont donc nous annoncer (indirectement, par leur nouveau voisinage) la disparition de leur lien avec le noeud A. Même si nous conservons le Sig_Neighborhood de A (qui peut rester vrai ou faux, nous ne pouvons pas savoir), le lien entre A et B devient uniquement orienté de A vers B, et non plus de B vers A. A nous devient alors inaccessible à partir de B.

**Algorithme de construction de la topologie globale.**

Soit 'a' le noeud local.
Soit NAT l'ensemble des noeuds à traiter, i.e. les noeuds dont il faut analyser le Sig_Neighborhood pour rajouter des liens au graphe de topologie. Initialement, NAT = {a}.

Soit NDT l'ensemble des noeuds déjà traités, i.e. les noeuds dont le Sig_Neighborhood a déjà été pris en compte. Initialement, NDT = ø.

Soit G le graphe de topologie globale, représenté sous la forme d'un ensemble de liens, chaque lien étant un triplet, constitués des 2 noeuds extrémités du lien et du réseau de transmission traversé. Initialement, G = ø. Tant que NAT ≠ ø, réaliser le traitement suivant :

- Soit n le premier élément de NAT.
    - o Soustraire n de NAT : ***NAT = NAT - {n}***
- Soit V l'ensemble des voisins contenus dans le Sig_Neighborhood de n.
- Ajouter au graphe G l'ensemble des liens entre n et les éléments de V:
    - o Pour chaque v de V, faire G = $G \cup \{(n, v, R_T\})$. ($R_T$ étant le réseau de transmission).
- Soit VJT le sous-ensemble de V, dont les éléments n'appartiennent pas à NDT. VJT représentent les voisins qui n'ont jamais été traités auparavant.
    - o Par définition : *VJT = V-NDT*
- Ajouter ces voisins à l'ensemble des voisins à traiter :
    - ○ $NAT = NAT \cup VJT$
- Ajouter n à l'ensemble des noeuds déjà traités :
    - o $NDT = NDT \cup \{n\}$
- Si NAT est vide :
    - ○ Alors la construction du graphe est terminée.
    - ○ Sinon, continuer le traitement en reprenant à « Soit n le premier élément de NAT ».

Le procédé selon l'invention présente notamment les avantages listés ci-après : le protocole FIRE est basé sur quatre grands principes :

- La récupération des topologies média,
- Une diffusion fiabilisée,
- Une gestion de noeuds destinataires et non d'interfaces de sortie,
- Une émission pertinente d'information (Non émission d'information connue par les noeuds voisins.)

**Principe 1 (P1) : Récupération des topologies média**

Le réseau de transmission (UHF, VHF, ...) remonte la topologie locale aux noeuds. Chaque noeud prend connaissance de sa topologie locale sans que FIRE n'émette le moindre paquet, sauvegardant ainsi la bande passante du réseau.

**Principe 2 (P2) : Diffusion fiabilisée**

Les informations de topologie échangées entre les noeuds sont diffusées de façon fiable, grâce aux mécanismes suivants.

*Diffusion*

Chaque noeud, à partir de sa topologie locale remontée par le réseau de transport (P1), et du voisinage de ses voisins, établit un sous-ensemble fini et déterministe de couples de noeuds pour lequel il sera relais de voisinages (RSN). Cette auto-élection est par construction locale et ne demande aucune transmission supplémentaire de la part de FIRE.

Ainsi, par exemple, si un noeud A s'auto-élit relais de voisinage (RSN) pour le couple de noeuds voisins (B, C), tout message de voisinage émis par B (et respectivement par C) sera retransmis par A vers C (respectivement vers B). La diffusion est donc par construction grandement limitée par rapport à une diffusion classique de flooding.

*Fiabilisation*

La fiabilisation des messages de voisinage est quant à elle effectuée par acquittement. Cet acquittement peut être effectué par la fonction d'acheminement réseau (« forwarding ») ou par la couche média.

**Principe 3 (P3) : Gestion de noeuds destinataires et non d'interface de sortie**

A contrario de beaucoup de protocoles décrits dans la littérature, FIRE est basé sur une approche de gestion des noeuds destinataires, et non d'interfaces de sortie.

Les informations de topologie sont émises vers un noeud en particulier et non sur un réseau. Cela permet, en cas de réseaux parallèles, de n'utiliser qu'un seul des réseaux pour émettre le paquet de signalisation de voisinage vers ce même noeud, limitant ainsi la bande passante consommée. Le choix de ce réseau (le plus rapide, le plus robuste, celui couvrant le plus de noeuds destinataires) est laissé à la fonction d'acheminement réseau.

**Principe 4 (P4) : Emission pertinente d'information**

En se basant sur le principe P3, quand deux noeuds A et B sont voisins au sens topologique du terme (P1), il n'est pas nécessaire pour A (respectivement B) de transmettre à B (respectivement A) des informations communes. Seules les informations supplémentaires, et donc pertinentes, sont transmises.

Ceci confère au procédé selon l'invention les avantages suivants :

- Une absence de trafic en cas de topologie stable
- La faible volumétrie des échanges protocolaires
- En cas de réseaux parallèles, absence de trafic sur certains réseaux
- Convergence rapide

**Revendications**

1. Procédé de routage fiabilisé au sein d'un système comprenant un ou plusieurs réseaux composés de plusieurs noeuds reliés entre eux par des moyens de communication, ledit système comprenant un accès au réseau de transmission ou ART chargé de transmettre sur un média physique les données vers un prochain noeud d'interconnexion réseau NIR, ledit système utilisant un protocole de routage à états de liens construisant la topologie des noeuds au sein d'un système de noeuds **caractérisé en ce que** ledit procédé de routage détermine la topologie logique de noeuds d'interconnexion réseau NIR en utilisant en combinaison les modules suivants :

    Module 11 NIR_TOPO_01 : Découverte du Voisinage grâce aux fonctions intrinsèques des réseaux physiques
    Module (12) : NIR_TOPO_02 :lissage des informations fournies par les ART pour améliorer la stabilité du protocole
    Module (13) : NIR_TOPO_03 : principe de distribution des voisinages vers l'ensemble des NIR
    Module (14) : NIR_TOPO_04 : Relayage des informations associées à un noeud (voisins, liens et leurs caractéristiques) Sig_Neighborhoods par un sous-ensemble des noeuds NIR (relais de Sig_Neighborhoods) Module 15 NIR_TOPO_05: Fiabilisation bond par bond de la transmission des Sig_Neighborhoods entre les différents noeuds Module 16 NIR_TOPO_06: Transmission des Sig_Neighborhoods en point-à-multipoint
    Module 17 NIR_TOPO_07 : Annonce des caractéristiques orientées des liens logiques uniquement par les routeurs source des liens Module 18 NIR_TOPO_08 : Marquage des données de signalisation pour gérer le non-séquencement en réception
    Module (19) : NIR_TOPO_09 : calcul de la topologie globale,

2. Procédé selon la revendication 1 **caractérisé en ce que** ledit module de calcul de la topologie globale exécute les étapes suivantes :

    Soit 'a' un noeud local.

Soit NAT l'ensemble des noeuds à traiter correspondant aux noeuds dont il faut analyser le Sig_Neighborhood pour rajouter des liens au graphe de topologie, Initialement, NAT = {a},
Soit NDT l'ensemble des noeuds déjà traités, i.e. les noeuds dont le Sig_Neighborhood a déjà été pris en compte, Initialement, NDT = ø,
Soit G le graphe de topologie globale, représenté sous la forme d'un ensemble de liens, chaque lien étant un triplet, constitués des 2 noeuds extrémités du lien et du réseau de transmission traversé, Initialement, G = ø,
Tant que NAT ≠ ø, exécuter les étapes suivantes :

- Soit n le premier élément de NAT,

  o Soustraire n de NAT : $NAT = NAT - \{n\}$

- Soit V l'ensemble des voisins contenus dans le Sig_Neighborhood de n.
- Ajouter au graphe G l'ensemble des liens entre n et les éléments de V:

  o Pour chaque v de V, faire $G = G \cup \{(n, v, R_T)\}$. ($R_T$ étant le réseau de transmission).

- Soit VJT le sous-ensemble de V, dont les éléments n'appartiennent pas à NDT. VJT représentent les voisins qui n'ont jamais été traités auparavant.

  o Par définition : $VJT = V - NDT$

- Ajouter ces voisins à l'ensemble des voisins à traiter :

  o $NAT = NAT \cup VJT$

- Ajouter n à l'ensemble des noeuds déjà traités :

  o $NDT = NDT$ U $\{n\}$

- Si NAT est vide :

  o Alors la construction du graphe est terminée.
  o Sinon, continuer en reprenant à l'étape « Soit n le premier élément de NAT ».

**3.** Procédé selon la revendication 1 **caractérisé en ce que** le module (11) de découverte du voisinage utilise les modules et les étapes suivantes :

le module de transmission ou « FORWARDER » s'appuie sur les réseaux de transmission pour calculer ses informations de voisinage, **NIR_TOPO_01/010,**
Chaque accès à un Réseau de Transmission ART du noeud NIR fournit au protocole selon l'invention, la topologie du réseau élémentaire dont il fait partie, utiliser une topologie comportant la description d'un graphe de noeuds ayant les propriétés suivantes :

Chaque noeud représente un NIR ou un relais de transmission Chaque lien est un lien symétrique, au sens de la possibilité de transmission,
et pour un noeud donné, chaque extrémité du lien transmet vers l'autre lien,
Utiliser une fonction de résolution d'adresse NIR en adresse liaison et la fonction réciproque assurée par l'ART, la topologie fournie contient des adresses de noeuds NIR,
**NIR_TOPO_01/020**
Lorsque l'ART fournit une topologie de réseau élémentaire au procédé selon l'invention, il fournit, les informations complémentaires suivantes :

• Débit de chaque lien, avec orientation du lien en cas de débits non symétriques,
• Temps d'accès moyen au canal physique de chaque lien,
• Qualité de chaque lien : bonne, moyenne, mauvaise, déduite, par exemple des informations fournies par le modem situé dans le média physique du système.

4. Procédé selon la revendication 1 **caractérisé en ce que** le module (12) lissage des informations fournies par les ART comprend l'exécution des étapes suivantes :

**NIR_TOPO_02/010**
Selon les caractéristiques dynamiques des réseaux de transmission, lisser certaines variations des caractéristiques des liens avant de les inclure dans le voisinage diffusé aux autres noeuds, et
**NIR_TOPO_02/020**
Pour gérer les réseaux maillés et lisser l'évolution de leur topologie, classer les nombres de bonds en 3 catégories (proche, médian, lointain) avec une hystérésis pour entrer et sortir de chaque catégorie en fonction du nombre de bonds réels,
Enfin, afin que les voisinages puissent être envoyés aux NIR voisins « nominativement », mettre à jour et fournir la topologie à 1 bond au FORWARDER.
**NIR_TOPO_02/030**
Sur réception d'une topologie d'un réseau élémentaire, et une fois l'opération de lissage effectuée (**NIR_TOPO_02/020**), sauvegarder la topologie lissée dans une table Local_Topologie_Table.
Quand Local_Topologies_Table est modifiée, alors la fonction de construction du graphe recalcule le graphe et met ensuite à jour la topologie des NIR.

5. Procédé selon la revendication 1 **caractérisé en ce que** ledit module (14) NIR_TOPO_04 de relayage des informations associées à un noeud exécute les modules suivants :

**NIR_TOPO_04/010:**

Un noeud N est RSN potentiel pour un couple de noeuds (A, B),
n°(A) < n°(B), si et seulement si toutes les conditions suivantes sont remplies :

A et B sont voisins de N,
A et B ne font pas partie d'un même réseau élémentaire,
N a un Sig_Neighborhood(A) et un Sig_Neighborhood(B) dans sa table des Sig_Neighborhoods,
B est absent de Sig_Neighborhood(A).

**NIR_TOPO_04/020:**
Soit un couple de voisins (A, B).
Soit nc(i) le nombre de couples de voisins relayés par chaque noeud i RSN potentiel de (A, B), les couples pris en compte devant être détectables par tous les autres noeuds RSN potentiels de (A, B).
Soit max_nc le maximum des nc(i), calculé sur l'ensemble des RSN potentiel de (A, B).
ledit protocole selon l'invention s'élit comme RSN pour un couple de voisins (A, B) si et seulement si :

il est RSN potentiel pour le couple (A, B),
et s'il respecte une des trois conditions suivantes :

○ 1 °/ Il est le seul noeud RSN potentiel pour le couple (A, B),
○ 2°/ Il est le seul noeud i dont nc(i) = max_nc
○ 3°/ Parmi tous les noeuds i dont nc(i) = max_nc, il possède le plus petit identifiant de noeud.

ledit procédé FIRE sauvegarde la liste des couples (A, B) dont il est RSN dans la table RSN_Status_Table.

6. Procédé selon la revendication 5 **caractérisé en ce qu'**il exécute pour l'élection de relayage des informations au moins les étapes suivantes
Soit a le noeud local, i.e. noeud sur lequel l'algorithme est exécuté.
Soit Va l'ensemble des noeuds voisins de a. Va est le voisinage local, calculé à partir des informations fournies par les ART.
Soit Wa,i l'ensemble des voisins d'un noeud i ∈ Va. Wa,i est l'ensemble des noeuds contenu dans le Sig_Neighborhood de i,
Si aucun Sig_Neighborhood n'est reçu, Wa,i = {a}.
Soit L ensemble des noeuds de la topologie locale, constituée du noeud local, des noeuds voisins et des noeuds voisins à deux bonds. L = Va ∪ Wa,i / i ∈ Va
**Etape 1**

La première étape consiste à construire, pour chaque noeud n ∈ L, l'ensemble connu des noeuds voisins de n, Vn.
Si n∈ Va, Vn = Wa,n par définition.
Si n ∉ Va, Vn = {noeuds i, tels que n ∈ Wa,i}
**Etape 2**
La deuxième étape consiste à établir, pour chaque noeud n, l'ensemble des couples (i, j) tels que i et j sont voisins de n, mais ne sont pas voisins entre eux, ledit ensemble étant noté Cn.
Soit n ∈ L. On a alors Cn = {(i, j) avec i et j appartenant à Vn, tels que i ≠ j, i ∉ Vj, et j ∉ Vi}

Notons C, l'union des Cn, pour tous les noeuds de L : $\mathbf{C} = \bigcup_{n \in L} \mathbf{Cn}$ , C contient l'ensemble des couples de noeuds de la topologie locale L qui sont voisins à 2 bonds sans être voisins entre eux,
Par construction, Cn est l'ensemble des couples pour lequel n est RSN potentiel.
**Etape 3**
La troisième étape consiste à déterminer, pour chaque couple c de noeuds distants de 2 bonds et non voisins entre eux, l'ensemble des RSN potentiels du couple c, noté Rc,
Soit c ∉ C., : Rc = {noeuds n, tq c ∈ Cn}.

Notons R, l'union des Rc, pour tous les couples c de C : $\mathbf{R} = \bigcup_{c \in C} \mathbf{Rc}$ .

**Etape 4**
La quatrième et dernière étape consiste à déterminer l'ensemble des couples pour lesquels le noeud local (noeud a) est relais, en exécutant les étapes suivantes :

Affectation d'un poids à chaque RSN potentiel
Pour chaque noeud n ∈ L :

- Associer un poids à n, poids égal au nombre de couples pour lesquels n est relais potentiel.

  p(n) : L → **N**
  n → Nombre de Ri ∈ R, tels que n ∈ Ri

ou en utilisant une fonction de poids adaptée à trier les noeuds, quelque soit le noeud de la topologie locale sur lequel le calcul est effectué.

**7.** Procédé selon la revendication 5 **caractérisé en ce que** le calcul des couples pour lesquels le noeud local est relais est exécuté par les étapes suivantes :

Soit C_RSN(a), l'ensemble des couples pour lesquels 'a' est RSN, C_RSN(a) est calculé de la manière suivante :

- Pour chaque couple c de C pour lequel a ∈ Rc:

  o Soit Rc_PM l'ensemble des noeuds de Rc dont le poids est maximal, Rc_PM = {i ∈ Rc, tel que p(i) ≥ p(j), quel que soit j ∈ Rc}
  o Soit $n_m$ le noeud de plus petit numéro qui appartienne à Rc_PM (il en existe un et un seul).
  o Le noeud 'a' est RSN de 'c' si est seulement si $n_m = a$ ou bien : $c \in C_{RSN(a)} ssii\ n_m = a$

**8.** Procédé selon la revendication 5 **caractérisé en ce que** un NIR A, RSN pour des couples (Xi, Yi) relaye tout Sig_Neighborhood reçus de Xi vers le noeud Yi *(et réciproquement de Yi vers Xi),* sauf si :

A a déjà reçu ce Sig_Neighborhood (même couple [source, numéro de séquence]) ou une version plus récente, en provenance de Yi *(resp. Xi)*,
Yi *(resp. Xi)* figure déjà dans la table des Sig_Neighborhoods de A, comme destinataire de ce Sig_Neighborhood (même couple [source, numéro de séquence]) ou d'une version plus récente,
Yi *(resp. Xi)* est le noeud origine du Sig_Neighborhood,
Yi *(resp. Xi)* est un voisin du noeud origine du Sig_Neighborhood.

**9.** Procédé selon la revendication 5 **caractérisé en ce que** lorsqu'un NIR A devient RSN pour un couple (X,Y), il relaye vers Y tous les Sig_Neighborhood stockés qu'il a reçus de X (*et réciproquement*), sauf si :

A a déjà reçu ce Sig_Neighborhood (même couple [source, numéro de séquence]) en provenance de Y (*resp. X*),
Y (*resp. X*) figure déjà dans la table des Sig_Neighborhood de A, comme destinataire de ce Sig_Neighborhood (même couple [source, numéro de séquence]),
Y *(resp. X)* est le noeud origine du Sig_Neighborhood,
Y *(resp. X)* est un voisin du noeud origine du Sig_Neighborhood.

**10.** Procédé selon l'une des revendications 5 à 9 **caractérisé en ce que** pour chaque Sig_Neighborhood reçu, le procédé vérifie s'il existe un SIg_Neighborhood de même noeud origine et de numéro de séquence identique ou plus récent :

Si oui, alors le procédé supprime le Sig_Neighborhood reçu.
Sinon le procédé stocke, dans une table appelée Distant_Neighborhood_Table :

le numéro du NIR_origine du Sig_Neighborhood (i.e. qui a généré initialement le Sig_Neighborhood),
le numéro de séquence du Sig_Neighborhood,
la liste des NIR voisins qui ont envoyés au noeud local un Sig_Neighborhood (NIR-origine). Cette liste est notée LPHR (List Of Previous Hops NIRs),
le contenu du Sig_Neighborhood reçu. Le contenu du Sig_Neighborhood est constitué des liens du noeud origine avec ses voisins, chaque lien étant un couple :

○ numéro de noeud voisin,
○ réseau de transmission à traverser pour joindre le noeud voisin.

Le numéro de séquence du Sig_Neighborhood stocké est le numéro de séquence le plus récent présent dans la liste LPHR.

**11.** Procédé selon l'une des revendications 5 à 9 **caractérisé en ce que** chaque NIR stocke, dans une table Distant Neighborhood_Table, pour chaque Sig_Neighborhood reçu :

la liste des NIR voisins à qui le noeud local a relayé un
Sig_Neighborhood(NIR_origine) et qui ont acquitté positivement, ladite liste étant notée LANH (List of Acknowledged Next Hops).

**12.** Procédé selon l'une des revendications 5 à 9 **caractérisé en ce que** suite à un re-calcul du voisinage local ou de la topologie, le procédé conserve dans la table des Sig_Neighborhood distants (Distant_Neighborhood_Table) tous les Sig_Neighborhood des noeuds ayant disparu.

**13.** Procédé selon la revendication 1 **caractérisé en ce que** le module (15) NIR_TOPO_05 de Fiabilisation bond par bond de la transmission des des Sig_Neighborhood vers des NIR voisins est situé dans les ART.

**14.** Procédé selon la revendication 1 **caractérisé en ce que** le Module (16) NIR_TOPO_06 de transmission des Sig_ Neighborhoods en point-à-multipoint met en oeuvre les étapes suivantes lors de la transmission d'un Sig_Neighborhood vers des NIR voisins, le procédé demande aux couches sous-jacentes utilisées d'envoyer le Sig_Neighborhood en mode point-à-multipoints,
Le Forwarder duplique alors le Sig_Neighborhood s'il doit être émis sur différents réseaux élémentaires,
Ensuite, chaque ART décide de procéder à un ou plusieurs envois, avec une fiabilisation adaptée (cf. NIR_TOPO_05), selon le type et la nature du réseau sous-jacent (point-à-point ou diffusant, fiable ou avec pertes importantes).

**15.** Procédé selon revendication 14 **caractérisé en ce qu'**il comporte un module NIR_TOPO_03/030, ledit procédé comportant les étapes suivantes :

un Sig_Neighborhood local étant transmis vers des voisins Ni, ledit procédé détermine quelles sont les informations de ce Sig_Neighborhood déjà connues par chaque voisin Ni, telles que la connectivité via radio, la mesure des débits et retranche ensuite lesdites informations du Sig_Neighborhood pour former un Sig_Neighborhood allégé noté

Sig_Neighborhood_Transmitted[Ni], le procédé transmettant ensuite les Sig_Neighborhood_Transmitted[Ni] aux étapes de la revendication 14, et **en ce que** ledit procédé reconstitue le Sig_Neighborhood(N) pour chaque Sig_Neighborhood_Transmitted reçu et pour chacune des topologies des réseaux élémentaires, en exécutant les étapes suivantes :

calcul du CRC sur le Sig_Neighborhood allégé reconstitué,
si le CRC est différent du CRC contenu dans le
Sig_Neighborhood_Transmitted, alors stocker le Sig_Neighborhood(N) dans la table Distant_ Neighborhood_Table et s'il existe un Sig_Neighborhood_Transmitted(N) dans la table Neighborhood_Rebuitding_table (21), l'effacer,
NIR_TOPO_03/60 : à chaque réception d'une nouvelle topologie de réseau élémentaire en provenance d'une ART, pour chaque Sig_Neighborhood_Transmitted présent dans la table Neighborhood_Rebuilding_ table :

Reconstruire le Sig_Neighborhood en prenant en compte les données de la nouvelle topologie de réseau élémentaire,
Calculer le CRC sur le Sig_Neighborhood (N) reconstitué,
Si la valeur de ce CRC est égal à la valeur du CRC contenu dans le Sig_Neighborhood_Transmitted,
Alors le procédé stocke le Sig_Neighborhood (N) reconstitué dans la table Distant_Neighborhood_Table et l'effacer de la table Neighborhood_Rebuilding_table,
Sinon ne rien faire.

**16.** Procédé selon la revendication 1 **caractérisé en ce que** le module (17) NIR_TOPO_07 d'annonce des caractéristiques orientées des liens logiques exécute les étapes suivantes lorsqu'il y a transmission du Sig_Neighborhood du NIR local vers des NIR voisins, le procédé enlève toute information qui dépend de l'orientation des liens et qui concerne les liens orientés dont il est destination.

**17.** Procédé selon la revendication 1 **caractérisé en ce que** le module (18) NIR_TOPO_08 de marquage des données de signalisation pour gérer le non-séquencement en réception exécute les étapes suivantes

o Dans le cas d'une transmission du Sig_Neighborhood du NIR local vers des NIR voisins, le procédé inclut un numéro de séquence permettant de détecter les reboot des noeuds et les déséquencements introduits par la transmission réseau ;
o Lorsque les machines sur lesquelles est implanté le procédé sont synchronisées (à quelques secondes près), ledit procédé utilise une date comme valeur de numéro de séquence.

## Claims

**1.** A method for secure routine within a system comprising one or more network composted of a plurality of nodes linked together by communication, means, said system comprising an access to the transmission network (ART), the assignment of which is to transmit the data on a physical medium to a next network interconnection node NIR, said system using a link-state routing protocol constructing the topology of the nodes within a system of nodes, **characterised in that** said routing method determines the logical topology of network interconnection nodes NIR using the following modules in combination:

Module (11): NIR _TOPO_01: discovering the neighbourhood by the intrinsic functions of the physical networks;
Module (12): NIR_TOPO_02: smoothing the information provides by the ARTs so as to improve the stability of the protocol,
Module (13): NIR_TOPO_03: principle of distributing the neighbourhoods to the set of NIRs;
Module (14): NIR_TOPO_04: relaying information (neighbours, links and their characteristics) associated witch a Sig_Neighbourhoods node via a sub-set of the NIR nodes (replay of Sig_Neighbourhoods);
Module (15): NIR__TOPO_05: hop-by-hop securing of the transmission of the Sig_Neighbourhoods between the différent nodes;
Module (16): NIR__TOPO_06: transmitting Sig_Neighbourhoods in a point-to-multipoint mode;
Module (17): NIR_TOPO_07: announcing oriented characteristics of the logical links solely by the source routeurs of the links;
Module (18): NIR_TOPO_08: marking signalling data so as to manage non-sequencing in reception;

Module (19): NIR_TOPO_09: calculating the global topology.

**2.** The method according to claim 1, **characterised in that** said module for calculating the global topology executes the following steps:

let 'a' be a local node;
let NAT be the set of nodes to be processed that correspond to tile nodes flor ;.;<hi ch the Sig_Neighbourhood is to be analysed so as to add links to the topology graph, wherein initially NAT = {a};
let NDT be the set of nodes already processed, that is the nodes for which the Sig_Neighbourhood has already been taken into account, wherein initially NDT = Ø;
let G be the global topology graph, represented in the form of a set of links, each link being a triplet constituted by the two end nodes of the link and of the transmission network that is traversed, wherein initially G = Ø,
as long as NAT ≠Ø, executing the following steps:

- let n be the first element of NAT,

  ○ subtracting n from NAT: NAT = NAT- {n},

- let V be the set of neighbours contained in the Sig_Neighbourhood of n,
- adding the set of links between n and the elements of V to the graph G:

  ○ for each v of V, carrying out G = G ∪ {(***n,v*** $\boldsymbol{R_T}$)} ($R_T$ being the transmission network,

- let VJT be the sub-set of V, the elements of which do not belong to NDT; VJT representing the neighbours that have never been professed before,

  ○ by définition: *VJT = V-NDT,*

- adding these neighbours to the set of neighbours to be professed:

  ○ ***MAT*** = ***MAT*** ∪ ***VJT***

- adding n to the set of nodes already processed,

  ○ ***NDT*** = ***NDT***∪{**n**},

- If NAT is empty:

  ○ then the construction of the graph is terminated,
  ○ otherwise, continuer by resuming at the step "let n be the first element of NAT".

**3.** The method according to claim 1, **characterised in that** the module (11) for discovering the neighbourhood uses the hollowing modules and steps:

the transmission module or "FORWARDER" relies on the transmission networks for calculating its neighborhood information,
NIR _TOPO_ 01/10,
each access to a transmission network ART of the node NIR provides the protocol according to the invention with the topology of the elementary network to which it belongs, using a topology comprising the description of a graph of nodes having the following properties:

each node represents an NIR or a transmission relay,
each link is a symmetric link, in the sense of the possibility of transmission, and for a given node each end of the link transmits to the other link,
using a function for resolving an NIR address into a connection address any a reciprocal function provided by the ART, with a topology provided containing the addresses of NIR nodes,
NIR_TOPO_01/20,
when the ART provides the method according to the invention with an elementary network topology it provides the following additional information:

- the troughput of each link, with orientation of the link in case of non-symmetric throughputs;
- the mean access time to the physical channel of each link;
- the quality of each link: good, average or poor, which is determined, for exemple, from information provided by the modem located in the physical medium of the system.

**4.** The method according to claim 1, charactetised in that the module (12) for smoothing the information provided by the ARTs comprises the execution of the following steps:

NIR_TOPO_02/010
according to the dynamic characteristics of the transmission networks, smoothing certain variations of the characteristics of the links before including them in the neighbourhood broadcast to the other nodes, and
NIR_TOPO_02/020
for managing the mashed networks and smoothing the revolution of their topology, classifying the number of hops intro three categories (close, medium, distant) with an hysteresis for entering and exiting each category as a function of the number of real hops,
finally, so that the neighborhoods can be "nominatively" sent to the neighbouring NIRs, updating and providing the 1-hop topology to the FORWARDER,
NIR_TOPO_02/030
on receipt of a topology of an elementary network, and once the smoothing operation is complete (NIR_TOPO_02/020), saving the smoothed topology in a table designated Local_Topology_Table,
when the Local_Topologies_Table is modified, then the graph construction function recalculates the graph and subsequently updates the topology of the NIRs.

**5.** The method according to claim 1, **characterised in that** said module (14) NIR_TOPO_04 for relaying information associated with a node executes the following modules:

NIR_TOPO_04/010:

a node N is potential RSN for a pair of nodes (A, B),
no. (A) < no.(B), provided that all of the following conditions are fulfilled:

A and B are neighbours of N,
A and B do not belong to the same elementary network,
N has a Sig_Neighbourhood(A) and a Sig_Neighbourhood(B) in its table of Sig_Neighbourhoods,
B is absent from Sig_Neighbourhood(A),

NIR_TOPO_04/020:
assuming a pair of neighbours (A, B),
let nc(i) be the number of pairs of neighbours relayed by each node i that is a potential RSN of (A, B), the pairs taken into account, having to be detectable by all of the other potential RSN nodes of (A, B),
let max_nc be the maximum of the nc(i)., calculated on the set of potential RSN of (A, B),
said protocol according to the invention is elected as RSN for a pair of neighbours (A, B) provided that:

it is potential RSN for the pair (A, B),
and if it complies with one of the following three conditions:

○ 1. it is the only potential RSN node for the pair (A, B);
○ 2. it is the only node i for which nc(i) = max_nc;
○ 3. it has the smallest node identifier from all of the nodes i for which nc(i) = max_nc,

said FIRE method saves the list of pairs (A, B) for which it is RSN in the RSN_Status_Table.

**6.** The method according to claim 5, **characterised in that** it executes for the election of relaying of information at least the hollowing steps:

let a be the local node, that is the node on which the algorithm is executed,

let Va be the set of neighbouring nodes of a; Va is the local neighbourhood, calculated on the basis of information provided, by the ARTs,
let Wa,i be the set of neighbours of a node i ∈ Va; Wa,i is the set of nodes contained in the Sig_Neighbourhood of i, if no Sig_Neighbourhoud is received, Wa,i = {a},
let L be the set of nodes of the local topology, constituted by the local node, the neighbourhood nodes and the 2-hop neighbourhood nodes; L = Va ∪ Wa,i/ i ∈ Va,
Step 1

the first step consists in constructing, for each node n ? L, the known set of neighbourhood nodes of n, Vn,
if n ∈ Va, Vn = Wa, n by definition,
if n ∉ Va, Vn {nodes i, so that n ∈ Wa,i};
Step 2
the second step consists in establising, for each node n, the set of pairs (i, j) so that i and j are neighbours of n, but are not neighbours to each other, said set being designted Cn, Vi}, let n ∈ L; thus Cn = {(i, j) with i and j belonging to Vn, so that i ≠j, i ∉ Vj and j ∉ Vi},

noting C, the union of the Cn-s, for all of the nodes of L: $C = \bigcup_{n \in L} Cn$ , C contains the set of pairs of nodes of the local topology L that are 2-hoop neighbours without being neighbours with each other,
by constrution, Cn is the set of pairs for which n is potential RSN;
Step 3
the third step consists in determining, for each pair c of nodes that are 2-hops apart and are not neighbours with each other, the set of potential RSNs of the pair c, designated Rc,
let c ∈ C.,: Rc = {nodes n, tq c ∈ Cn},

noting R, the union of the Rc-s, for all of the pairs c of C: $R = \bigcup_{c \in C} Rc$

Step 4
the fourth and final step consists in determining the set of pairs for which the local node (node a) is relay, by executing the following steps:
assigning a weight to each potential RSN,
for each node n ∈ L:

- associating a weight with n, which weight is equal to the number of pairs for which n is potential relay,

  p(n): L → N

n → the number of Ri ∈ R, so that n ∈ Ri
or by using a weighting function that is adapted to sort the nodes, regardless of the node of the local topology on which the calculation is carried out.

**7.** The method according to claim 5, **characterised in that** the calculation of the pairs for which the local node is relay is executed by the following steps:

let C_RSN(a) be the set of pairs for which 'a' is RSN, C_RSN(a) is calculated as follows:

- for each pair c of C for which a ∈ Rc:

  ○ let Rc_PM be the set of nodes of Rc for which the weight is maximal, Rc_PM = {i ∈ Rc, so that p(i) ≥p(j), regardless of whether j ∈ Rc},
  ○ let $n_m$ be the node with the smallest number that belongs to Rc_PM (only one exists);
  ○ the node 'a' is RSN of 'c' provided that $n_m$ = a or even: $c \in C_{RSN(a)}{}^{ssi}\, n_m$, = a

**8.** The method according to claim 5, **characterised in that** an NIR A, RSN for pairs (Xi, Yi) relays every Sig_Neighbourhood received from Xi) to the node Yi (*and vice-versa from Yi to* Xi) *to Xi),* unless:

A has already received this Sig_Neighbourhood (same pair [source, sequence number]) or a more recent version originating from Yi (*resp. Xi*),
Yi (*resp. Xi*) already figures in the table of the Sig_Neighbourhoods of A as a recipient of this Sig_Neighbourhood (same pair [source, sequence number]) or a more recent version,
Yi (*resp. Xi*) is the source node of the Sig_Neighbourhood
Yi (*resp. Xi*) is a neighbour of the source node of the Sig_Neighbourhood.

**9.** The method according to claim 5, **characterised in that** when an NIR A becomes RSN for a pair (X, Y) it relays to 'Y' all of the stored Sig_Neighbourhoods that it has received from X (*and vice-versa*), unless:

A has already received this Sig_Neighbourhood (same pair [source, sequence number]) originating from Y (*resp. X*),
Y (*resp. X*) already figures in the table of the Sig_Neighbourhoods of A as a recipient of this Sig_Neighbourhood (same pair [source, sequence number]),
Y (*resp. X*) is the source node of the Sig_Neighbourhood,
Y (*resp. X*) is a neighbour of the source node of the Sig_Neighbourhood.

**10.** The method according to any one of claims 5 to 9, **characterised in that** for each Sig_Neighbourhood received the method verifies if a Sig_Neighbourhood exists with the same source node and with an identical or more recent sequence number:

if so, then the method deletes the Sig_Neighbourhood received, otherwise, the method stores the following in a table referred to as Distant_Neighbourhood_Table:

the number of the source_NIR of the Sig_Neighbourhood (that is, which initially generated the Sig_Neighbourhood),
the sequence number of the Sig_Neighbourhood,
the list of the neighbouring NIRs that sent a Sig_Neighbourhood (source_NIR) to the local node; this list is designated LPHR (List of Previous Hops NIRs),
the content of the received Sig_Neighbourhood; the content of the received Sig_Neighbourhood is constituted by the links of the source node with its neighbours, each link being a pair of the following:

○ the number of the neighbouring node,
○ the transmission network to be traversed to reach the neighbouring node;

the sequence number of the stored Sig_Neighbourhood is the most recent sequence number that is present in the LPHR.

**11.** The method according to any one of claims 5 to 9, **characterised in that** each NIR stores the following in a Distant_Neighbourhood_Table for each Sig_Neighbourhood received:

the list of neighbouring NIRs to which the local node has relayed a Sig_Neighbourhood(source_NIR) and which have positively acknowledged, said list being designated LANH (List of Acknowledged Next Hops).

**12.** The method according to any one of claims 5 to 9, **characterised in that**, following a recalculation of the local neighbourhood or of the topology, the method retains in the table of distant Sig_Neighbourhoods (Distant_Neighbourhood_Table) all of the Sig_Neighbourhoods of the nodes that have disappeared.

**13.** The method according to claim 1, **characterised in that** the module (15) NIR_TOPO_05 for hop-by-hop securing of the transmission of the Sig_Neighbourhoods to the neighbouring NIRs is located in the ARTs.

**14.** The method according to claim 1, **characterised in that** the module (16) NIR_TOPO_06 for transmitting the Sig_Neighbourhoods in a point-to-multipoint mode implements the following steps during the transmission of a Sig_Neighbourhood to neighbouring NIRs, the method requests the subjacent layers used to send the Sig_Neighbourhood in point-to-multipoint mode,
the Forwarder then duplicates the Sig_Neighbourhood if it has to be sent on various elementary network,
subsequently, each ART decides to proceed with one or more transmissions, with matched security (cf. NIR_TOPO_05), according to the type and the nature of the subjacent network (point-to-point or broadcasting, secure or with significant losses).

**15.** The method according to claim 14, **characterised in that** it comprises an NIR_TOPO_03/030 module, said method comprising the following steps:

a local Sig_Neighbourhood being transmitted towards neighbours Ni, said method determines which information of this Sig_Neighbourhood is already known by each neighbour Ni, such as connectivity via radio, measures the throughputs and subsequently splits said information of the Sig_Neighbourhood so as to form a reduced Sig_Neighbourhood designated Sig_Neighbourhood_Transmitted [Ni], the method subsequently transmitting the Sig_Neighbourhood_Transmitted[Ni] to the steps of claim 14, and **in that** said method reconstitutes the Sig_Neighbourhood(N) for each Sig_Neighbourhood_Transmitted received and for each of the topologies of the elementary networks by executing the following steps:

calculating the CRC on the reconstituted reduced Sig_Neighbourhood;
if the CRC differs from the CRC contained in the Sig_Neighbourhood_Transmitted then storing the Sig_Neighbourhood(N) in the Distant_Neighbourhood_Table and, if a Sig_Neighbourhood_Transmitted[N] exists in the Neighbourhood_Rebuilding_table (21), deleting it,
NIR_TOPO_03/60: each time a new elementary network topology is received that originates from an ART, for each Sig_Neigbourhood_Transmitted present in the Neighbourhood_Rebuilding_table:

reconstructing the Sig_Neighbourhood by taking into account the data of the new elementary network topology,
calculating the CRC on the reconstituted Sig_Neighbourhood(N),
if the value of this CRC is equal to the value of the CRC contained in the Sig_Neigbourhood_Transmitted then the method stores the reconstituted
Sig_Neigbourhood(N) in the Distant_Neighbourhood_Table and deletes it from the Sig_Neighbourhood(N) in the Distant_Neighbourhood_Table and deletes it from the Neigbourhood_Rebuilding_table, otherwise nothing is to be done

**16.** The method according to claim 1. **characterised in that** the module (17) NIR_TOPO_07 for announcing the oriented characteristics of the logical links executes the next steps when there is a transmission from the Sig_Neighbourhood of the local NIR to the neighbouring NIR, the method removes any information that depends on the orientation of the links and that relates to the oriented links it is destination of.

**17.** The method according to claim 1, **characterised in that** the module (18) NIR_TOPO_08 for marking signalling data so as to manage non-sequencing in reception executes the following steps:

○ in the case of a transmission from the Sig_Neighbourhood of the local NIR to the neighbouring NIR, the method incudes a sequence number allowing the detection of the reboots of the nodes and the desequencing introduced by the network transmission;
○ when the machines on which the method is used are synchronised (to the nearest second), said method uses a date as a sequence number value.

**Patentansprüche**

**1.** Verfahren zur sicheren Leitwegführung in einem System, das ein oder mehrere Netzwerke umfasst, die aus mehreren Knoten zusammengesetzt sind, die durch Kommunikationsmittel miteinander verbunden sind, wobei das System einen Zugang zu dem Übertragungsnetz oder ART umfasst, das die Aufgabe hat, die Daten auf einem physikalischen Medium zu einem nächsten Netzwerkverbindungsknoten (NIR) zu übertragen, wobei das System ein Routingprotokoll mit Verbindungszuständen benutzt, das die Topologie der Knoten innerhalb eines Systems von Knoten erstellt, **dadurch gekennzeichnet, dass** das Routingverfahren die logische Topologie von Netzwerkverbindungsknoten (NIR) mit Hilfe einer Kombination der folgenden Module ermittelt:

Modul (11): NIR_TOPO_01: Entdecken der Nachbarschaft, anhand der intrinsischen Funktionen der physikalischen Netze;
Modul (12): NIR_TOPO_02: Glätten der von den ARTs gelieferten Informationen, um die Stabilität des Protokolls zu verbessern;
Modul (13): NIR_TOPO_03: Prinzip des Verteilens der Nachbarschaft zu allen NIRs;

Modul (14): NIR_TOPO_04: Weiterleiten der mit einem Sig_Neighbourhoods-Knoten assoziierten Informationen (Nachbarn, Verbindungen und deren Charakteristiken) über eine Teilmenge der NIR-Knoten (Relais von Sig_ Neighbourhoods);
Modul (15): NIR_TOPO_05: Sichern der Übertragung von Sig_Neighbourhoods zwischen den verschiedenen Knoten Sprung für Sprung;
Modul (16): NIR_TOPO_06: Punkt-zu-Mehrpunkt-Übertragen der Sig_Neighbourhoods;
Modul (17): NIR_TOPO_07: Übermitteln der orientierten Charakteristiken der logischen Verbindungen nur durch die Ursprungsrouter der Verbindungen;
Modul (18): NIR_TOPO_08: Markieren von Signalisierungsdaten, um die Nichtsequenzierung beim Empfang zu verwalten;
Modul (19): NIR_TOPO_09: Berechnen der globalen Topologie.

2. Verfahren nach Anspruch 1, **dadurch gekennzeichnet, dass** das Modul zum Berechnen der globalen Topologie die Annehmen, dass 'a' ein lokaler Knoten ist;
Annehmen, dass NAT der zu verarbeitende Satz von Knoten ist, die den Knoten entsprechen, deren Sig_Neighbourhood analysiert werden soll, Verbindungen zum Topologiediagramm hinzuzufügen, wobei anfänglich NAT = {a} ist;
Annehmen, dass NDT der bereits verarbeitete Satz von Knoten ist, d.h. die Knoten, deren Sig_Neighbourhood bereits berücksichtigt ist, wobei NDT = Ø ist;
Annehmen, dass G das globale Topologiediagramm ist, dargestellt in Form eines Satzes von Verwindungen, wobei jede Vebindung ein Triplett ist, das von den beiden Endknoten der Verbindung und des durchquerten Übertragungsnetzes gebildet wird, wobei anfänglich G = Ø ist,
solange NAT =Ø ist, Ausführen der folgenden Schritte:

- angekommen, dass n das erste Element von NAT ist,

  ○ n von NAT subtrahieren : $NAT = NAT - \{n\}$,

- angenommen, V ist der Satz von Nachbarn, die in der Sig_Neighbourhood von n enthalten sind.
- den Satz von Verbindungen zwischen n und den Elementen von V zum Diagramm G hinzufügen:

  ○ für jedes v von V soll $\boldsymbol{G = G \cup \{(n,v,R_T)\}}$ sein (wobei $R_T$ das Übertragungsnetz ist),

- angenomnen, VJT ist die Teilmenge von V, deren Elemente nicht zu NDT gehören; wobei VJT die Nachbarn repräsentiert, die bisher noch nie verarbeitet wurden,

  ○ per Definition: $VJT = V - NDT$,

- Hinzufügen dieser Nachbarn zu dem zu verarbeitenden Satz von Nachbarn:

  ○$NAT = NAT \cup$ VJT

- Hinzufügen von n zu dem bereits verarbeiteten Satz von Knoten,

  ○ $NDT = NDT \cup \{n\}$,

- wenn NAT leer ist:

  ○ ist das Diagramm fertig erstellt,
  ○ ansonsten Fortfahren mit dem Schritt "angenommen n ist das erste Element von NAT".

3. Verfahren nach Anspruch 1, **dadurch gekennzeichnet, dass** das Modul (11) zum. Entdecken der Nachbarschaft die folgenden Module und Schritte beinhaltet:

   das Übertragunsmodul oder "FORWARDER" stützt sich auf die Übertragungsnetze, um ihre Nachbarschaftsinformationen zu berechnen,
   NIR_TOPO_01/10,
   jeder zugang zu einem Übertragungsnetz ART des NIR-Kriotens fügt dem erfindungsgemäßen Protokoll die

Topologie des elementaren Netzwerks hinzu, zu dem es gehörth, wobei eine Topologie verwendet wird, die Beschreibung eines Diagramms von Knoten mit den folgenden Eigenschaften umfasst:

jeder Knoten repräsentiert ein NIR oder ein Übertragungsrelais,
jede Verbindung ist eine symmetrische Verbindung im Sinne der Übertragungsmöglichkeit, und für einen gegebenen Knoten überträgt jedes Ende der Verbindung zu der anderen Verbindung,
Verwenden, einer Punktion zum Auflösen einer NIR-Adresse in eine Verbindungsadresse und der von dem ART bereitgestellten Umkehrfunktion, wobei die gelieferte Topologie die von NIR-Knoten enthält,
NIR_TOPO_01/20,
wenn das ART dem erfindungsgemäßen Verfahren eine elementare Netzwerktopologie bereitstellt, dann stellt es die folgenden Zusatzinformationen bereit:

- den Durchsatz jeder verbindung, mit Orientierung der Werbindung im Falle von nichtsymmetrischen Durchsätzen;
- die mittlere Zugriffszeit auf den physikalischen Kanal jeder Verbindung;
- die Qualität jeder Verbindung: gut, durchschnittlich, schlecht, abgeleitet zum Bespiel anhand der Informationen, die von dem im physikalischen Medium des Systems befindlichen Modem bereitgestellt werden.

**4.** Verfahren nach Anspruch 1, dadurch gekenntzeichnet, dass das Modul (12) zum Glätten der von den ARTs bereitgestellten Informationen die Ausführung der folgenden Schritte beinhaltet:

NIR_TOPO_02 /010
Glätten, je nach den dynamischen Charakteristiken der Übertragungsnctze, bestimmter Variationen der Charakteristiken der Verbindungen vor deren Einschluss in die Nachbarschaft, die zu den anderen Knoten gebroadcastet wird, und
NIR_TOPO_02/020
zum Verwalten der vermaschten Netze und zum Glätten der Evolution ihrer Topologie, Klassifizieren der Anzahl von Sprüngen in drei Kategorie (nahe, mittel, fern) mit einer Hysterese zum Eintreten in und Austreten aus jeder (r) Kategorie in Abhängigkeit von der Anzahl echter Sprünge,
schließlich, die Nachbarschaften "nominell" zu den benachbarten NIRs gesendet werden können, Aktualisieren und Bereitstellen der 1-Sprung-Topologie zum FORWARDER,
NIR_TOPO_02/030
Sichern, nach dem Empfang einer elementaren Netzwerkopologie und nach Abschluss der Glättungsoperation (NIR_TOPO_02/020), der geglätteten Topologie in einer Tabelle Local_Topology_Table,
Neuberechnen, nach dem Modifizieren der Local_Topologies_Table, des Diagramms durch die Diagrammerstellungsfungsfunktion und dann Aktualisieren der Topologie der NIRs.

**5.** Verfahren nach Anspruch 1, **dadurch gekennzeichnet, dass** das Modul (14) NIR_TOPO_04 zum Weiterleiten von mit, einem Knoten assoziierten Informationen die folgenden Module ausführt:

NIR_TOPO_04/010:
ein Knoten N ist potentiell RSN für ein Knotenpaar (A, B),
Nr. (A) < Nr. (B), vorasugesetzt, dass alle folgenden Bedingungen erfüllt sind:
A und B sind Nachbarn von N,
A und B gehören nicht zum selben elementaren Netzwerk,
N hat eine Sig_Neighbourhood(A) und Sig_Neighbourhood(B) in seiner Tabelle von Sig_Neighbourhoods,
B fehlt in Sig_Neighbourhood(A),
NIR_TOPO_04/020:

unter Annahme eines Nachbarpaares (A, B),
angenommen, nc(i) ist die Anzahl von von jedem Kneten i als potentielle RSN, von (A, B) weitergeleiteten Nachbarpaaren, wobei die berücksichtigten Paare für alle anderen potentiellen RSN-Knoten von (A, B) erkennbar sein müssen,
angenommen, max_nc ist das Maximum von nc(i), berechnet an dem Satz von potentiellen RSN, von (A, B), das erfindungsgemäße Protokoll wird als RSN, für ein Nachbarpaar (A, B) nur dann ausgewählt, wenn:

es ein potentielles RSN für das Paar (A, B) ist,

und wenn es eine der drei folgenden Bedingungen erfüllt,

○ 1. es ist der einzige potentielle RSN-Knoten für das Paar (A, B),
○ 2. es ist der einzige Knoten i, für den nc(i) = max_nc ist;
○ 3, es hat von allen Knoten i, für die nc(i) = max_nc ist, die kleinste Knotenkennung,

das FIRE-Verfahren sichert die Liste von Paaren (A, B), für die es RSN in der Tabelle RSN_Status_fable ist.

**6.** Verfahren nach Anspruch 5, dadurch gekenntzeichnet, dass es für die Auswahl des Weiterleitens von Informationen wenigstens die folgenden Schritte ausführt,

angenommen, a ist der lokale Knoten, d.h. der Knoten, an dem der Algorithmus ausgeführt wird,
angenomment, Va ist der Satz von Nachbarknoten von a; Va ist die lokale Nachbarschaft, berechnet auf der Basis der von den ARTS bereigestellten, Informationen,
angenommen, Wa,i ist der Satz von Nachbarn eines Knotens i ∈ Va, Wa,i ist der satz von Knoten, die in der Sig_Neighbouhhood von i enthalten sind.
wenn keine Sig_Neighbourhood empfangen wird, dann ist Wa,i = {a},
angenommen, L ist der Satz von Knotent der lokalen Topologie, gebildet vom lokalen Knoten, den Nachbarschaftsknoten und den 2-Sprung-Nachbarschaftsknoten; L= Va ∪ Wa,i/i ∈ Va,

Schritt 1

der erste Schritt besteht im Aufbauen, für jeden Knoten n ? L, des bekannten Satzes von Nachbarschaftsknoten von n, Vn,
wenn n ∈ Va, Vn Wan per Definition,
wenn n ∉ Va, Vn ={Knoten i, so dans n ∈ Wa,i};
Schritt 2
der zweite Schritt besteht im Aufbauen, für jeden Knoten n, des Satzes von Paaren (i, j), so dass i und j Nachbarn von n sind, aber keine Nachbarn voneinander sind, wobei dieser Satz mit Cn bezeichnet wirt,
angekommen n ∈ L; so dass Cn = {(i, j), wobei i und j zu Vn gehören, so dass i # j, i ∉ Vj ud j ∉ Vi},

man beachte C, die Vereinigung der Cn, für alle Knoten von $C = \bigcup_{n \in L} Cn$, C enthält den Satz von Knotenpaaren der lokalen Topologie L, die 2-Sprung-Nachbarn sind, ohne Nachbarn voneinander zu sein,
durch Konstruktion ist Cn der Satz von Paaren, für die n potentielles RSN ist; Schritt 3
der dritte Schritt besteht im Ermitteln, für jedes Paar c von Knoten, die 2 Sprünge voreinander entfern und keine Nachbarn voreinander sind, des Satzes von potentielle RSNs des Paares c, mit Rc bezeichnet,
angenommen c ∈ C.: Rc = {Knoten n, tq c ∈ Cn},

man beachte R, die Vereinigung der Rc, für alle Paare c von C: $R = \bigcup_{c \in C} Rc$, Schritt 4

der vierte und letzte Schritt besteht im Vermitteln des Satzes von Paaren, für die der lokale Knoten (Knoten a) Relais ist, durch Ausführen der folgenden Schritte:
Zuordnen einer Gewichtung zu jedem potentiellen RSN,
für jenen Knoten, n ∈ L:

= Assoziieren einer Gewichtung mit n, die Gewichtung gleich der Anzahl von Paaren ist, für die n ein potentielles Relais ist,

p(n): L → N

n → die Anzahl von Ri ∈ R, so dass n ∈ Ri ist,
oder durch Anwenden einer Gewichtungsfunktion, angepasst zum Sortieren der Knoten, unabhängig vom Knoten der lokalen Topologie, auf dem die Berechrung erflogt

7. Verharen nach Anspruch 5, **dadurch gekennzeichnet, dass** die Berechnung der Paare, für die der lokale Knoten Relais ist, mit den folgenden Schritten ausgeführt wird:

angenommen, C_RSN(a) ist der Satz von Paaren, für die 'a' RSN ist, dann wird C_RSN(a) wie folgt berechnet:

für jedes Paar c von C, für das a ∈ Rc ist:

○ angenommen, Rc_PM ist der Satz von Knoten von Rc, deren Gewichtung maximal ist, Rc_PM = {i ∈ Rc, so dass p(i) ≥p(j) ist, unabhängig davon, ob j ∈ {Rc},
○ angenommen, $n_m$ ist der Knoten mit der kleinsten Nummer, die zu Rc_PM gehört (es existiert nur eine einzige),
○ Knoten 'a' ist RSN von 'c' nur dann, wenn $n_m$ = a ist oder wenn: c ∈ $C_{RSN(a)}$*ssi* $n_m$ = *a.*

8. Verfahren nach Anspruch 5, **dadurch gekennzeichnet, dass** ein NIR A, RSN für Paare (Xi, Yi), jede von Xi empfangene Sig_Neighbourhood zum Knoten Yi *(und umgekehrt von Yi zu Xi)* weiterleitet, außer wenn:

A bereits diese Sig_Neighbourhood empfangen hat (selbes Paar [Ursprung, Sequenznummer]) oder eine neuere Version, die von Yi (*bzw.Xi*) stammt,
Yi (*bzw.Xi*) bereits in der Tabelle der Sig_Neighbourhood von A als Empfänger dieser Sig_Neighbourhood (selbes Paar [Ursprung, Sequenznummer]) oder einer neueren Version ist,
Yi (*bzw. Xi*) der Ursprungsknoten der Sig_Neighbourhood ist,
Yi (*bzw. Xi*) ein Nachbar des Ursprungsknotens der Sig_Neighbourhood ist.

9. Verfahren nach Anspruch 5, **dadurch gekennzeichnet, dass**, wenn ein NIR A zu RSN, für ein Paar (X, Y) wird, es alle gespeicherten Sig_Neighbourhoods zu Y weiterleitet, die es von X. (*und umgekehrt*) empfangen hat, es sei denn, dass:

A bereits diese Sig_Neighbourhood empfangen hat (selbes Paar [Ursprung, Sequenznummer]), die von Y (*bzw. X*) stammt,
Y (*bzw. X*) bereits in der Tabelle der Sig_Neighbourhoods von A als Empfänger dieser Sig_Neighbourhood steht (selbes Paar [Ursprung, Sequenznummer]),
Y (*bzw. X*) der Ursprungsknoten der Sig_Neiglibourhood ist,
Y (*bzw. X*) ein Nachbar des Ursprungsknotens der Sig_Neighbourhood ist.

10. Verfahren nach der Ansprüche 5 bis 9, **dadurch gekennzeichnet, dass** das Verfahren für jede empfangene Sig_ Neighbourhood prüft, ob es eine Sig_Neighbourhood mit demselben Urprungsknoten und einer identischen oder jüngeren Sequenznummer gibt:

wenn ja, dann unterdückt das Verfaharen die empfangene Sig_Neighbourhood,
ansonsten speichert das Verfahren die folgenden in einer Tabelle mit der Bezeichnung Distant_Neighbourhood_ Table:

die Nummer der source_NIR der Sig_Neighbourhood (d.h. die anfänglich die Sig_Neighbourhood erzeugt hat),
die Sequenzriummer der Sig_Neighbourhood,
die Liste der Nachbar-NIRs die eine Sig_Neighbourhood (source_NIR) zum lokaler, Knoten, gesendet haben; diese Liste wird LPHR (List of Previous Hops NIRs) genannt,
den Inhalt der empfangenen Sig_Neighbourhood, wobei der Inhalt der Sig_Neighbourhood durch die Verbindungen des Ursprungsknotens mit seinen Nachbarn gebildet wird, wobei jede Verbindung ein Paar ist:

○ Nummer des Nachbarknotens,
○ Übertragungsnetz, das zum Erreichen des Nachbarknotens durchquert werden muss;
die Sequenznummer der gespeicherten Sig_Neighbourhood ist die neueste Sequenznummer in der LPHR-Liste.

11. Verfahren nach einem der Ansprüche 5 bis 9, **dadurch gekennzeichnet, dass** jeder NIR, in einer Tabelle Distant_ Neighbourhood_Table für jede empfangene Sig_Neighbourhood Folgendes speichert:

die Liste von Nachbar-NIRs, zu denen der lokale Knoten eine Sig_Neighbourhood(source_NIR) weitergeleitet hat und die positiv quittiert haben, wobei diese Liste LANH (List of Acknowledged Next Hops) genannt wird.

**12.** Verfahren nach einem der Ansprüche 5 bis 9, **dadurch gekennzeichnet, dass** das Verfahren nach einer Neuberechnung der lokalen Nachbarschaft oder der Topologie in der Tabelle von fernen Sig_Neighbourhoods (Distant_ Neighbourhood_Table) alle Sig_Neighbourhoods der verchwundenen Knoten führt.

**13.** Verfahren nach Anspruch 1, **dadurch gekennzeichnet, dass** sich das Modul (15) NIR_TOPO_05 zum Sprung-für-Sprung-Sichern der Übertragung der Sig_Neighbourhoods zu den Nachbar-NIRs in den ARTs befindet.

**14.** Verfahren nach Anspruch 1, **dadurch gekennzeichnet, dass** das Modul (16) NIR_TOPO_06 zum Punkt-zu-Mehrpunkt-Übertragen der Sig_Neighbourhoods die folgenden Schritte bei der Übertragung Sig_Neighbourhood zu Nachbar-NIRs implementiert, wobei das Verfahren verlangt, dass die verwendeten darunterliegenden Schichten die Sig_ Neighbourhood im Punkt-zu-Mehrpunkt-Modus senden,
der Forwarder dann die Sig_Neighbourhood dupliziert, wenn sie auf verschiedenen elementaren Netzen gesendet werden muss,
jedes ART dann beschließt, mit einer oder mehreren Sendungen fortzufahren, mit einer geeigneten Sicherheit (siehe NIR_TOPO-05), je nach Art und Natur des darunterliegenden Netzwerks (Punkt zu Punkt oder Broadcast, sicher oder mit signifikanten Verlusten).

**15.** Verfahren nach Anspruch 14, **dadurch gekennzeichnet, dass** es ein NIR_TOPO 03/030 Modul umfasst, wobei das Verfahren die folgenden Schritte beinhaltet:

eine lokale Sig_Neighbourhood wird zu Nachbarn Ni gesendet, wobei das Verfahren emittelt, welche Informationen dieser Sig_Neilghbourhood bereits von jedem Nachbarn Ni bekannt sind, wie z.B. die Konnektivität per Radio, die Durchsatzrate, und dann die Informationen der Sig_Neighbourhood abzieht, um eine reduzierte Sig_ Neighbourhood zu bilden, Sig_Neighbourhood_Transmitted[Ni] genannt, wobei das Verfahren dann die Sig_ Neighbourhood_Transmitted[Nil zu den Schritten von Anspruch 14 überträgt, und dadurch, dass das Verfahren die Sig__Neighbourhood(N) für jede empfangene Sig_Neighbourhood_Transmitted und für jede der elementaren Netzwerktopologien durch Ausführen der folgenden Schritte neu bildet:

Berechnen der CRC an der neu gebildeten reduzierten Sig_Neighbourhood;
wenn sich die CRC von der CRC in der Sig_Neighbourhood_Transmitted unterscheidet, Speichern der Sig_Neighbourhood(N) in der Distant_Neighbourhood_Table und Löschen einer evtl. in der Neighbourhood_Rebuilding_table (21) existierenden Sig_Neighbourhood_Transmitted[N],
NIR_TOPO_03/60: bei jedem Empfang einer neuen elementaren Netzwerktopologie, die von einem ART stammt, für jede Sig_Neighbourhood_Transmitted in der Tabelle Neighbourhood_Rebuilding_table:

Rekonstruieren der Sig_Neighbourhood unter Berücksichtigung der Daten der neuen elementaren Netzwerktopologie,
Berechnen der CRC an der neu gebildeten Sig_Neighbourhood(N),
wenn der Wert dieser CRC gleich dem Wert der in Sig_Neighbourhood_Transmitted enthaltenen CRC ist, dann speichert das Verfahren die neu gebildete Sig_Neighbourhood(N) in der Distant_Neighbourhood_Table und löscht sie aus der Neighbourhood_Rebuilding_table,
ansonsten wird nichts getan.

**16.** Verfahren nach Anspruch 1, **dadurch gekennzeichnet, dass** das Modul (17) NIR_TOPO_07 zum Übermitteln der orientierten Charakteristiken der logischen Verbindungen die nächsten Schritte ausführt, wenn es eine Übertragung von der Sig_Neighbourhood des lokalen NIR zu den Nachbar-NIR gibt, das Verfahren entfernt jegliche Informationen, die von der Orientierung der Verbindungen abhängen und die sich auf die orientierten Verbindungen, beziehen, deren Bestimmung sie sind.

**17.** Verfahren nach Anspruch 1, **dadurch gekennzeichnet, dass** das Modul (18) NIR_TOPO_08 zum Markieren von Signalisierungsdaten, um die Nichtsequenzierung beim Empfang zu verwalten, die folgenden Schritte ausführt:

○ im Falle einer Übertragung des Sig_Neighbourhood des lokalen NIR zu den Nachbar-NIR bezieht das Verfahren eine Sequenznummer zum Erkennen der Reboots der Knoten und der von der Netzwerkübertragung eingeführten Desequenzierungen ein;
○ wenn die Maschinen, auf denen das Verfahren angewendet wird, synchronisiert (auf ein paar Sekunden genau) sind, dann verwendet das Verfahren ein Datum als Sequenznummernwert.

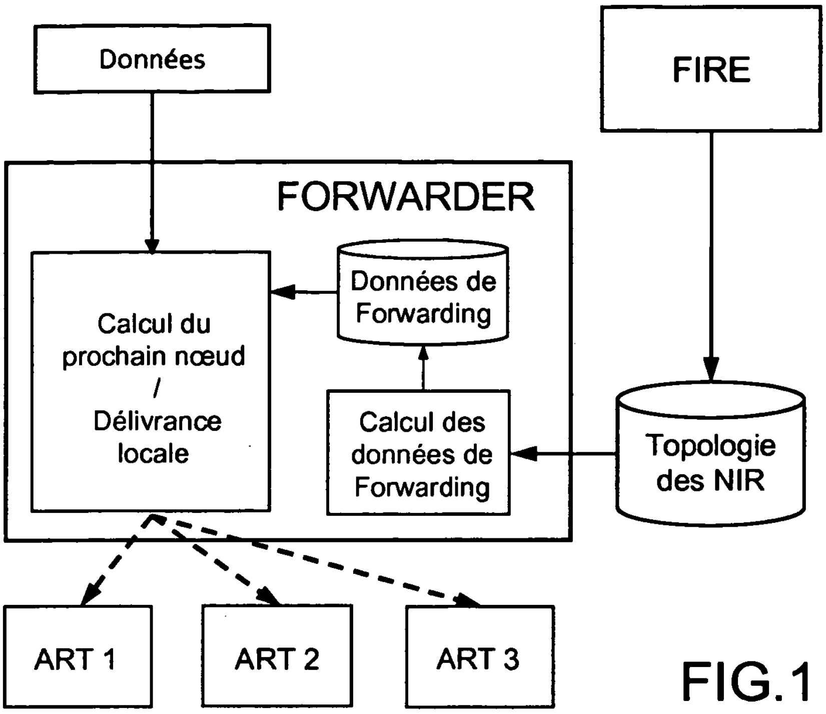
Données
FIRE
FORWARDER
Données de Forwarding
Calcul du prochain nœud / Délivrance locale
Calcul des données de Forwarding
Topologie des NIR
ART 1
ART 2
ART 3

FIG.1

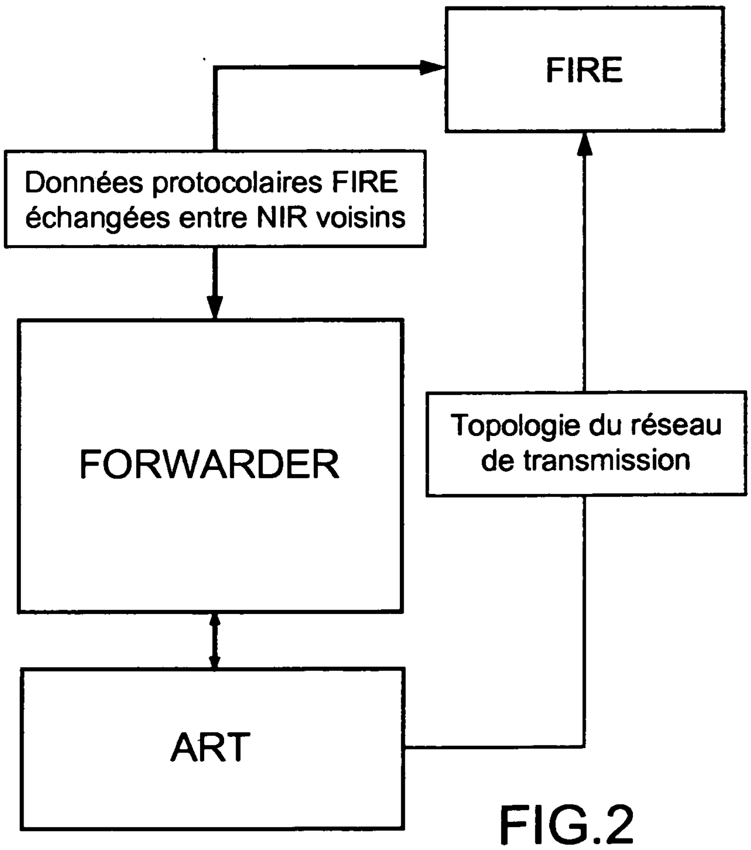
FIRE
Données protocolaires FIRE échangées entre NIR voisins
FORWARDER
Topologie du réseau de transmission
ART

FIG.2

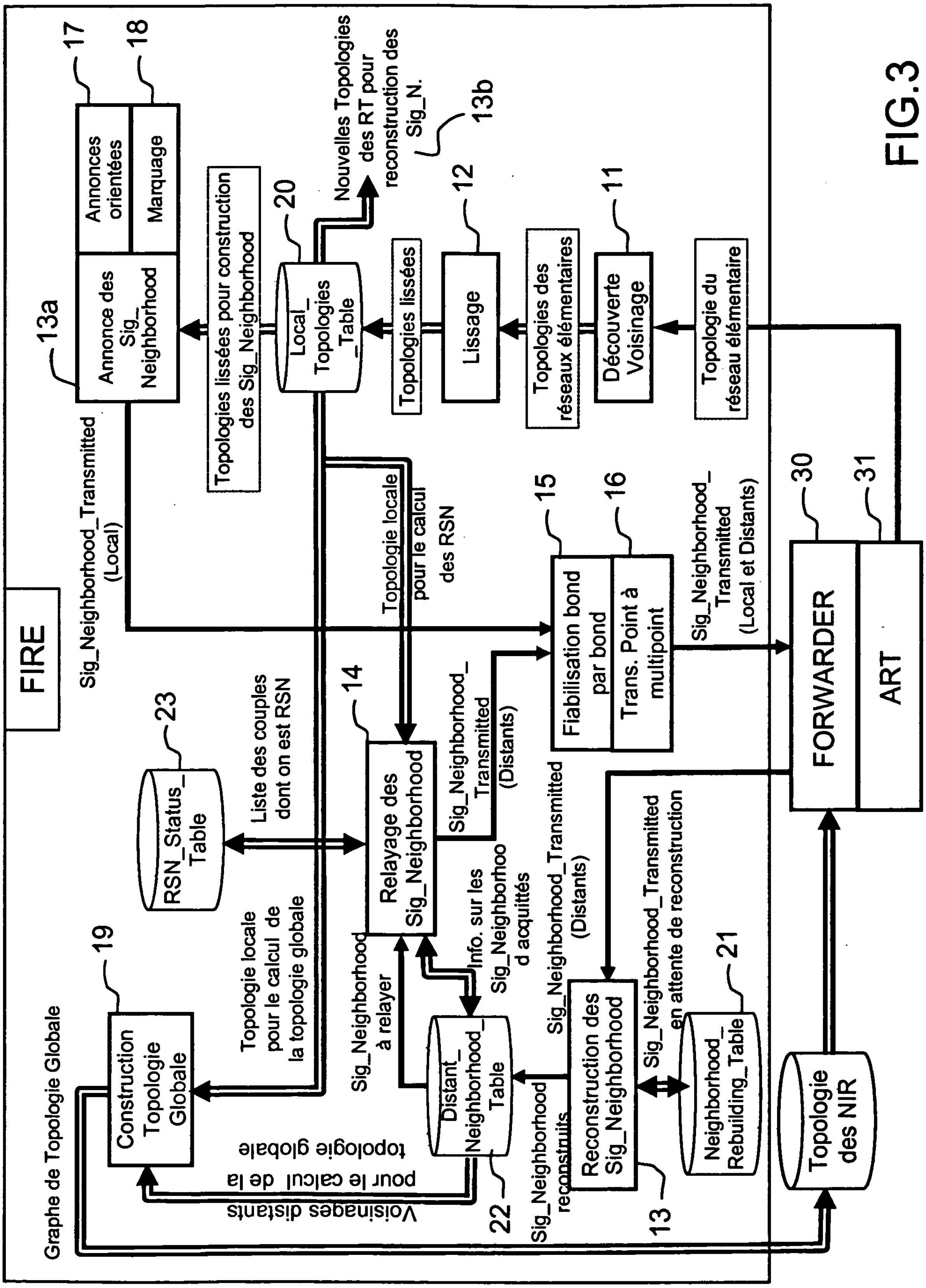
FIRE
Annonce des Sig_ Neighborhood
13a
Annonces orientées
17
Marquage
18
Topologies lissées pour construction des Sig_Neighborhood
Local_ Topologies _Table
20
Nouvelles Topologies des RT pour reconstruction des Sig_N.
13b
Topologies lissées
Lissage
12
Topologies des réseaux élémentaires
Découverte Voisinage
11
Topologie du réseau élémentaire
Sig_Neighborhood_Transmitted (Local)
Topologie locale pour le calcul des RSN
Fiabilisation bond par bond
15
Trans. Point à multipoint
16
Sig_Neighborhood_ Transmitted (Local et Distants)
FORWARDER
30
ART
31
Liste des couples dont on est RSN
RSN_Status_ Table
23
Relayage des Sig_Neighborhood
14
Sig_Neighborhood_ Transmitted (Distants)
Info. sur les Sig_Neighborhood acquittés
Sig_Neighborhood_Transmitted (Distants)
Sig_Neighborhood_Transmitted en attente de reconstruction
Graphe de Topologie Globale
Construction Topologie Globale
19
Topologie locale pour le calcul de la topologie globale
Sig_Neighborhood à relayer
Distant_ Neighborhood_ Table
22
Voisinages distants pour le calcul de la topologie globale
Sig_Neighborhood reconstruits
Reconstruction des Sig_Neighborhood
13
Neighborhood_ Rebuilding_Table
21
Topologie des NIR

FIG.3

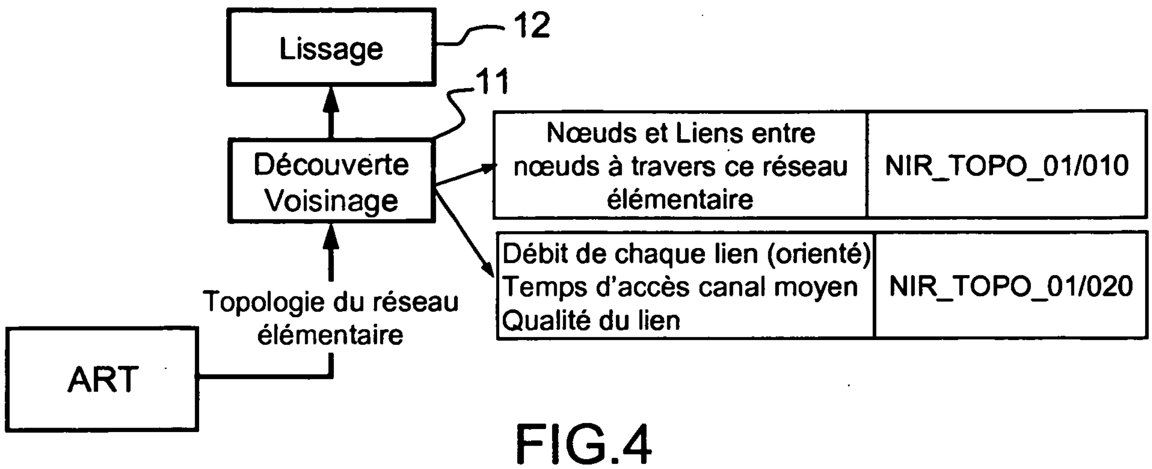
Lissage
12
11
Découverte Voisinage
Nœuds et Liens entre nœuds à travers ce réseau élémentaire
NIR_TOPO_01/010
Débit de chaque lien (orienté)
Temps d'accès canal moyen
Qualité du lien
NIR_TOPO_01/020
Topologie du réseau élémentaire
ART

FIG.4

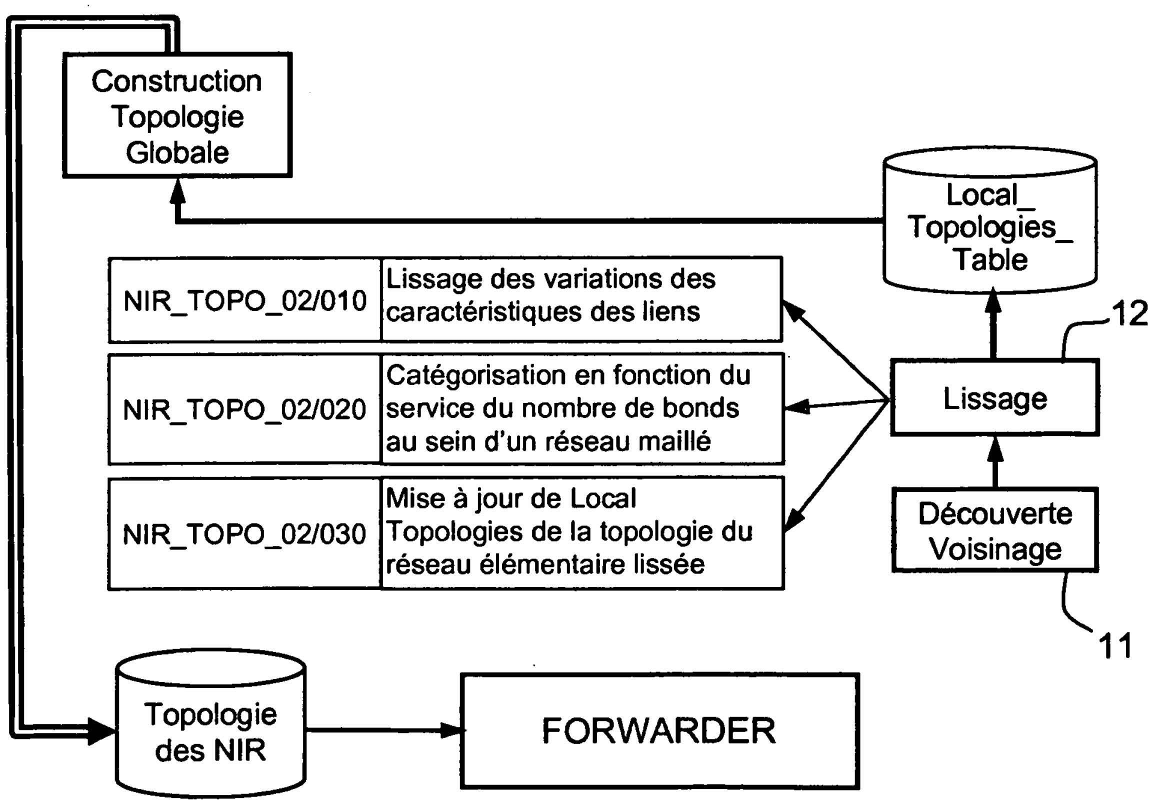
Construction Topologie Globale
Local_ Topologies_ Table
NIR_TOPO_02/010
Lissage des variations des caractéristiques des liens
NIR_TOPO_02/020
Catégorisation en fonction du service du nombre de bonds au sein d'un réseau maillé
NIR_TOPO_02/030
Mise à jour de Local Topologies de la topologie du réseau élémentaire lissée
12
Lissage
Découverte Voisinage
11
Topologie des NIR
FORWARDER

FIG.5

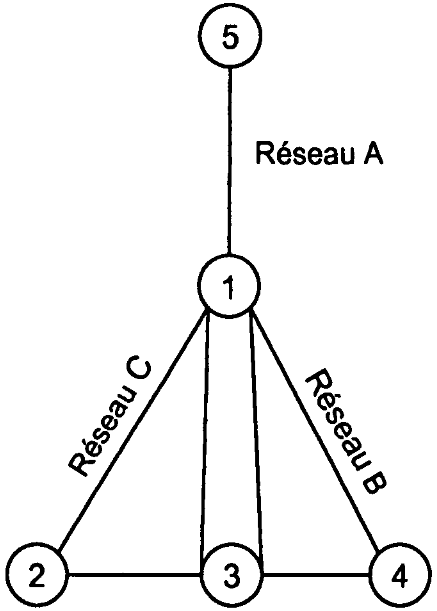


Sig_Neighborhood de 1 vaut :
{(1<->2 / C), (1<->3 / C), (1<->3 / B), (1<->4 / B), (1<->5 / A)}

Sig_Neighborhood de 1 transmis vers 2, i.e. Sig_Neighborhood_Transmitted[2](1)
= {(1<->5 / A), (1<->3 / B), (1<->4 / B)}

Sig_Neighborhood_Transmitted[3](1)
= {(1<->5 / A)}

Sig_Neighborhood_Transmitted[4](1)
= {(1<->5 / A), (1<->2 / C), (1<->3 / C)}

Sig_Neighborhood_Transmitted[5](1)
= {(1<->2 / C), (1<->3 / C), (1<->3 / B), (1<->4 / B)}

⇒Pour chacun des voisins de 1, le Sig_Neighborhood_Transmitted est différent. Savoir si la transmission sera plus optimale en envoyant 4 messages (1/destinataire) ou 1 seul message contenant la concaténation du voisinage transmis (qui vaut Sig_Neighborhood) n'est pas du ressort de FIRE. Seul le FORWARDER sait quel est le meilleur réseau de sortie (par ex. pour joindre 3) et seules les ART savent si le réseau est point-à-point, broadcast ou autre.

⇒ FIRE forme un message qu'il donne au FORWARDER (cf. NIR_TOPO_06) :
Part 1 = {(1<->5 / A)}, destinations = 2, 3, 4
Part 2 = {(1<->2 / C), (1<->3 / C)}, destinations = 4, 5
Part 3 = {(1<->3 / B), (1<->4 / B)}, destinations = 2, 5

FIG.6

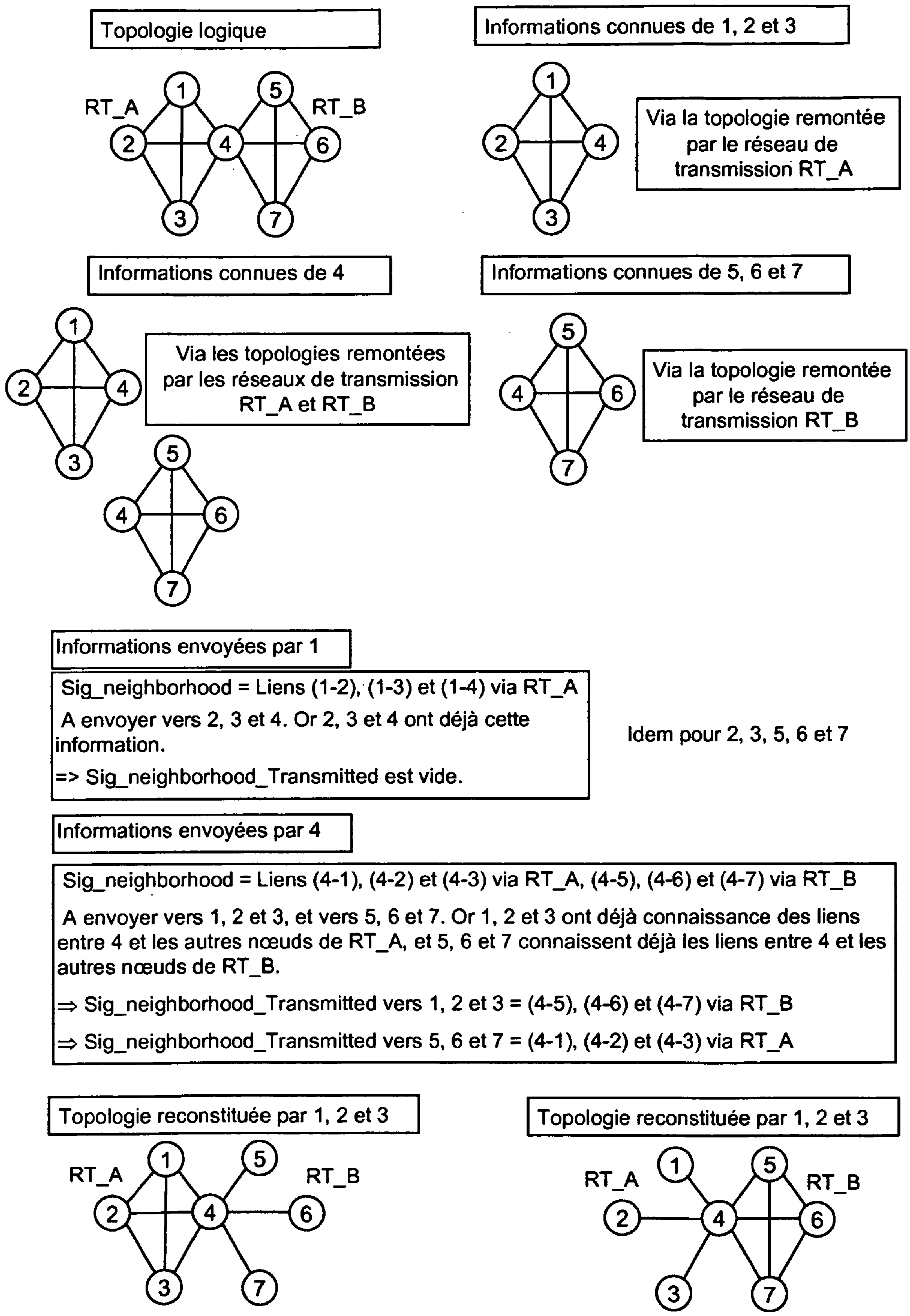
Topologie logique
RT_A
RT_B
1
2
3
4
5
6
7
Informations connues de 1, 2 et 3
Via la topologie remontée par le réseau de transmission RT_A
Informations connues de 4
Via les topologies remontées par les réseaux de transmission RT_A et RT_B
Informations connues de 5, 6 et 7
Via la topologie remontée par le réseau de transmission RT_B
Informations envoyées par 1
Sig_neighborhood = Liens (1-2), (1-3) et (1-4) via RT_A
A envoyer vers 2, 3 et 4. Or 2, 3 et 4 ont déjà cette information.
=> Sig_neighborhood_Transmitted est vide.
Idem pour 2, 3, 5, 6 et 7
Informations envoyées par 4
Sig_neighborhood = Liens (4-1), (4-2) et (4-3) via RT_A, (4-5), (4-6) et (4-7) via RT_B
A envoyer vers 1, 2 et 3, et vers 5, 6 et 7. Or 1, 2 et 3 ont déjà connaissance des liens entre 4 et les autres nœuds de RT_A, et 5, 6 et 7 connaissent déjà les liens entre 4 et les autres nœuds de RT_B.
⇒ Sig_neighborhood_Transmitted vers 1, 2 et 3 = (4-5), (4-6) et (4-7) via RT_B
⇒ Sig_neighborhood_Transmitted vers 5, 6 et 7 = (4-1), (4-2) et (4-3) via RT_A
Topologie reconstituée par 1, 2 et 3
Topologie reconstituée par 1, 2 et 3

FIG.7

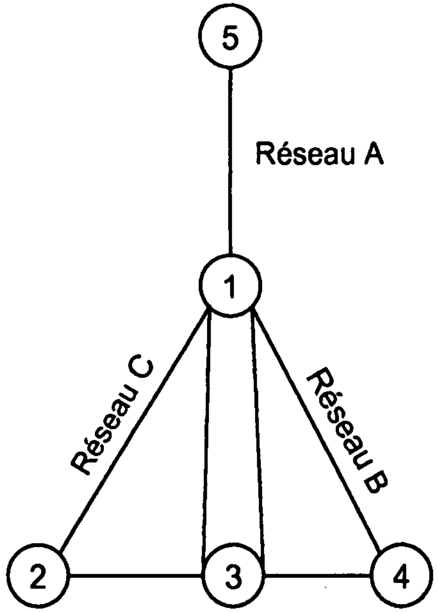


Reconstitution de Sig_neighborhood(1) au niveau de 3:

- Sig_neighborhood_Transmitted(1) reçu par 3 :
  = {(1<->5 / A)}

- Informations locales :

  - Topologie fournie par le réseau B : (1,3), (1,4), (3,4)
    => (1<->3 / B) et (1<->4 / B) doivent figurer dans Sig_neighborhood (1)

  - Topologie fournie par le réseau C : (1,2), (1,3), (2,3)
    => (1<->2 / C) et (1<->3 / C) doivent figurer dans Sig_neighborhood (1)

⇒ Sig_neighborhood (1) vaut donc :
  {(1<->5 / A), (1<->3 / B), (1<->4 / B), (1<->2 / C), (1<->3 / C)}

FIG.8

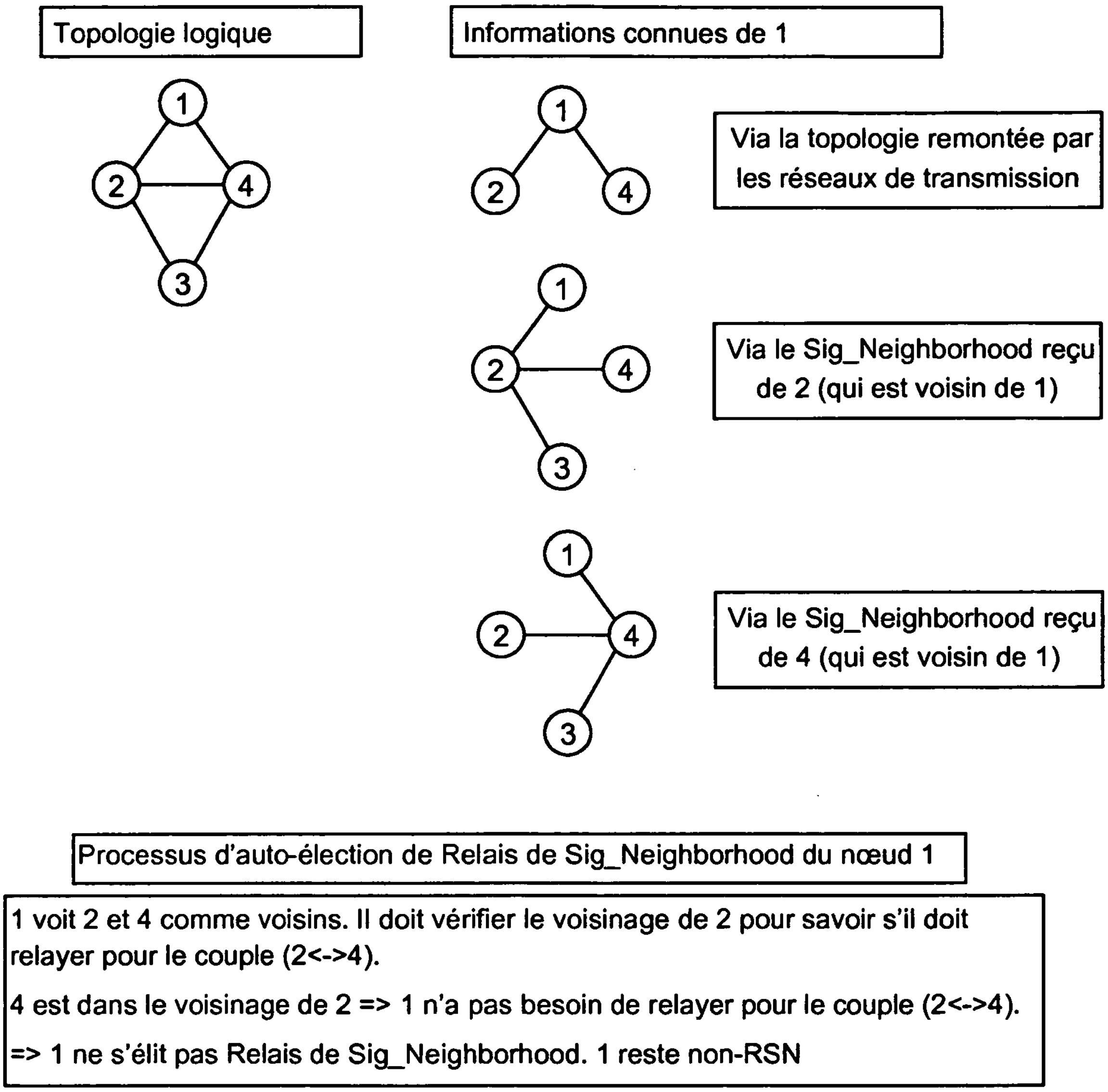
Topologie logique
Informations connues de 1
Via la topologie remontée par les réseaux de transmission
Via le Sig_Neighborhood reçu de 2 (qui est voisin de 1)
Via le Sig_Neighborhood reçu de 4 (qui est voisin de 1)
Processus d'auto-élection de Relais de Sig_Neighborhood du nœud 1
1 voit 2 et 4 comme voisins. Il doit vérifier le voisinage de 2 pour savoir s'il doit relayer pour le couple (2<->4).
4 est dans le voisinage de 2 => 1 n'a pas besoin de relayer pour le couple (2<->4).
=> 1 ne s'élit pas Relais de Sig_Neighborhood. 1 reste non-RSN

FIG.9

Topologie logique

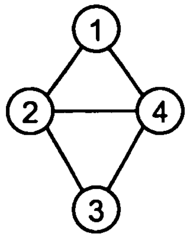

Informations connues de 2

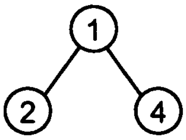

Via le Sig_Neighborhood reçu de 1 (qui est voisin de 2)

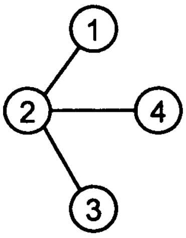

Via la topologie remontée par les réseaux de transmission

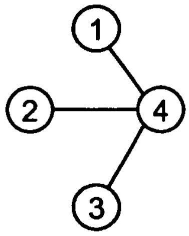

Via le Sig_Neighborhood reçu de 4 (qui est voisin de 2)

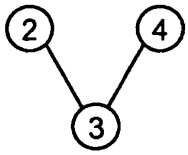

Via le Sig_Neighborhood reçu de 3 (qui est voisin de 2)

Processus d'auto-élection de Relais de Sig_Neighborhood du nœud 1

2 voit 1, 3 et 4 comme voisins. Il doit vérifier les voisinages de 1 et de 3 pour savoir s'il doit relayer pour les couples (1<->3), (1<->4) et (3<->4)

3 n'est pas dans le voisinage de 1 => 2 est relais potentiel entre (1<->3).
4 est dans le voisinage de 1 => 2 n'a pas besoin de relayer pour le couple (1<->4)
4 est dans le voisinage de 3 => 2 n'a pas besoin de relayer pour le couple (3<->4)

⇒ 2 est RSN potentiel pour (1<->3)

⇒ Par symétrie, 4 est aussi RSN potentiel pour (1<->3)

Pour n'avoir qu'un seul RSN, seul le nœud qui a le numéro le plus petit se choisit RSN.

=> 2 est RSN pour le couple (1<->3)

FIG.10

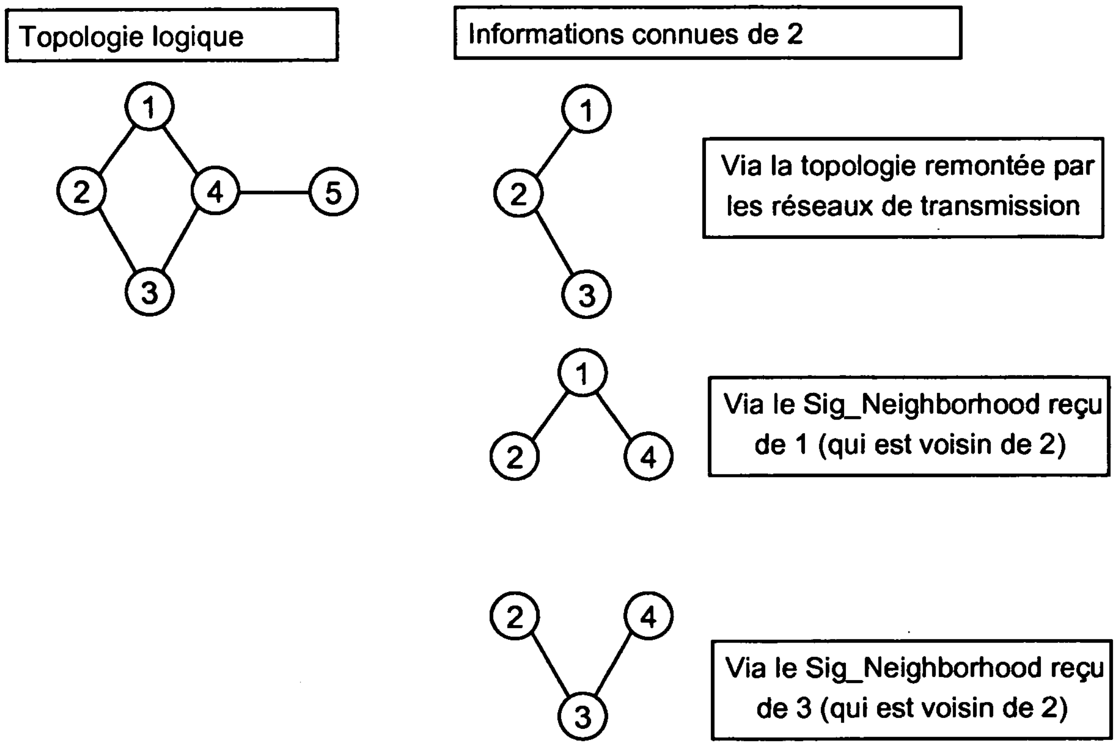


Conclusion pour 2 sur son statut de Relais de Sig_Neighborhood

2 voit 1 et 3 comme voisins. Il doit vérifier les voisinages de 1 (ou de 3).

3 n'est pas dans le voisinage de 1 => 2 est RSN potentiel pour (1<->3).

Recherche des autres RSN potentiels pour (1<->3) en analysant les Sig_neighborhood reçus de 1 et 3 :
Les Sig_neighborhood de 1 et 3 contiennent 4 => 4 est aussi RSN potentiel pour (1<->3).

Vu de 2, 4 n'est RSN que pour un seul couple => 2 et 4 sont potentiellement RSN pour le même nombre de couples

Le plus petit numéro de nœud départage les 2 RSN

2 s'élit Relais de Sig_neighborhood pour (1<->3)

FIG.11

Topologie logique

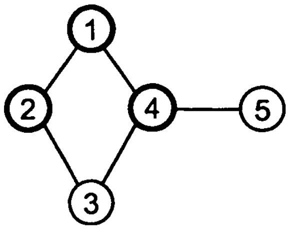

Relais de Sig_Neighborhood

1 est RSN de (2<->4)

2 est RSN de (1<->3)

4 est RSN de (1<->5) & (3<->5)

NB. Un RSN ne renvoie jamais un Sig_Neighborhood vers le nœud origine ou un voisin du nœud origine (s'il en a connaissance).

Ex : même si 2 est RSN pour (1<->3), s'il reçoit de 1 un Sig_Neighborhood(3), 2 ne relaye pas ce Sig_Neighborhood vers 3.

Distribution d'un Sig_Neighborhood généré par 3

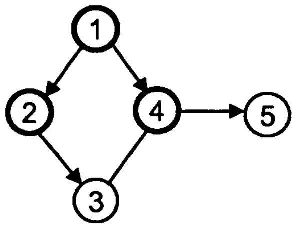

Distribution d'un Sig_Neighborhood généré par 5

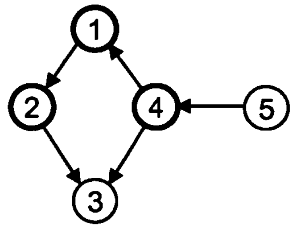

NB. 3 reçoit 2 fois le Sig_Neighborhood(5). Quand on connaît la topologie, l'envoi de 2 vers 3 est inutile, mais 2 n'a qu'une vision partielle : son relayage depuis 1 vers 3 est systématique. En fait, si 4 était RSN de (1<->3), la distribution serait optimale. Nous voyons là un cas de sous-optimalité de l'algorithme.

Distribution d'un Sig_Neighborhood généré par 3

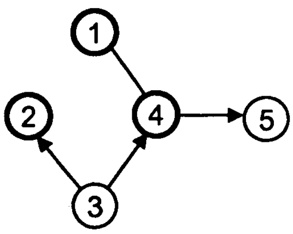

NB. 1 ne relaye pas Sig_Neighborhood (3) entre 2 et 4 car 2 sait que 4 est voisin de 3.

Distribution d'un Sig_Neighborhood généré par 2 et 4

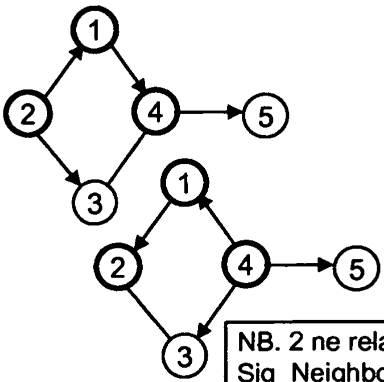

NB. 2 ne relaye pas Sig_Neighborhood (4) entre 1 et 3 car 2 sait que 3 est voisin de 4.

FIG.12

| Distant_Neighborhood_Table | | | | | |
|---|---|---|---|---|---|
| Nœud Origine | Numéro de séquence | LPHR [Voisins émetteurs (i.e.dont on a reçu le sg_neighborhood du nœud origine)] | LANH [Voisins récepteurs ayant acquittés] | Contenu du Sig_neighborhood | |
| | | Nœud | Nœud | Nœud | Réseau de Transmission |
| | | | | | |

FIG.13

Topologie logique

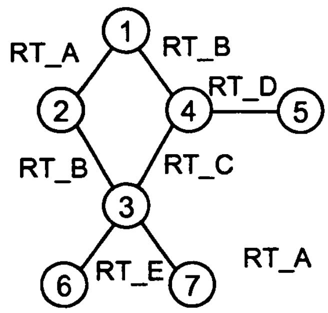


Relais de Sig_neighborhood

1 est RSN de (2<->4)
2 est RSN de (1<->3)
3 est RSN de (2<->6), (2<->7), (4<->6), (4<->7)
4 est RSN de (1<->5) & (3<->5)

Exemple de Distant_neighborhood_Table du nœud 3

| Distant_Neighborhood_Table | | | | | |
|---|---|---|---|---|---|
| Nœud Origine | Numéro de séquence | LPHR [Voisins émetteurs (i.e.dont on a reçu le sg_neighborhood du nœud origine)] | LANH [Voisins récepteurs ayant acquittés] | Contenu du Sig_neighborhood | |
| | | Nœud | Nœud | Nœud | Réseau de Transmission |
| 1 | SN_10 | 2 | 6,7 | 2 | RT_A |
| | | | | 4 | RT_B |
| 2 | SN_8 | 2 | 6[(1)] | 1 | RT_A |
| | | | | 3 | RT_B |
| 4 | SN_9 | 4 | 6,7 | 1 | RT_B |
| | | | | 3 | RT_C |
| | | | | 5 | RT_D |

(1) 7 n'as pas encore acquitté le Sig_neighborhood(2) de numéro de séquence SN_8.
(2) Aucun Sig_neighborhood de 5, 6 et 7 n'est reçu par 3 (Optimisation des Sig_neighborhood_Transmitted)

FIG.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2008055539 A
- WO 055539 A
- US 6069895 A
- EP 1189384 A